(19) Europäisches Patentamt / European Patent Office / Office européen des brevets

(11) **EP 4 414 900 A1**

(12) **EUROPEAN PATENT APPLICATION**
published in accordance with Art. 153(4) EPC

(43) Date of publication:
**14.08.2024 Bulletin 2024/33**

(21) Application number: **22878304.9**

(22) Date of filing: **16.09.2022**

(51) International Patent Classification (IPC):
**G06N 20/00** (2019.01)     **G06T 7/00** (2017.01)

(52) Cooperative Patent Classification (CPC):
**G06N 20/00; G06T 7/00**

(86) International application number:
**PCT/JP2022/034670**

(87) International publication number:
**WO 2023/058433 (13.04.2023 Gazette 2023/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.10.2021 JP 2021164984**

(71) Applicant: **Sony Group Corporation**
**Tokyo 108-0075 (JP)**

(72) Inventor: **SUZUKI, Kenji**
**Tokyo 108-0075 (JP)**

(74) Representative: **2SPL Patentanwälte PartG mbB**
**Landaubogen 3**
**81373 München (DE)**

(54) **LEARNING DEVICE, LEARNING METHOD, SENSING DEVICE, AND DATA COLLECTION METHOD**

(57)     A learning device includes a calculation unit that calculates a degree of influence of data collected by a sensing device on model training by machine learning, and a learning unit that generates a trained model by a few-label learning process of training the model by using data in which the degree of influence calculated by the calculation unit satisfies a condition.

FIG.4

EP 4 414 900 A1

## Description

Field

The present disclosure relates to a learning device, a learning method, a sensing device, and a data collection method.

Background

In various technical fields, information processing using machine learning (also simply referred to as "learning") is utilized, and a technology for training a model such as a neural network has been provided. In such learning, a technique is provided in which a correct answer label (label) is assigned to acquired data to create a plurality of sets of teaching data which are then used to perform learning (see, for example, Patent Literature 1).

Citation List

Patent Literature

Patent Literature 1: JP 2021-026505 A

Summary

Technical Problem

According to the conventional technique, teaching data is created by assigning a correct answer label to each of sets of data based on whether a user has pressed an evaluation button, and, in response to the plurality of sets of teaching data reaching a predetermined number, machine learning using the plurality of sets of teaching data is performed.
However, there is room for improvement in the related art. For example, the related art only uses, for learning, data in which a correct answer label is assigned to each set of data, and does not take into account of the influence of each set of data on model training. Therefore, in a case where the acquired data is not appropriate, it may be difficult to generate an appropriate model, for example, the generated model would be a less accurate model. In such a case, using an appropriate model is difficult. It is therefore desired to make a model generated using appropriate data available.
Therefore, the present disclosure proposes a learning device, a learning method, a sensing device, and a data collection method that can make a model generated using appropriate data available.

Solution to Problem

According to the present disclosure, a learning device includes a calculation unit that calculates a degree of influence of data collected by a sensing device on model training by machine learning; and a learning unit that generates a trained model by a few-label learning process of training the model by using data in which the degree of influence calculated by the calculation unit satisfies a condition.

Brief Description of Drawings

FIG. 1 is a diagram illustrating an example of a processing flow of an information processing system according to an embodiment of the present disclosure.
FIG. 2 is a diagram illustrating an example of a learning process according to an embodiment of the present disclosure.
FIG. 3 is a diagram illustrating an example of the configuration of an information processing system according to an embodiment of the present disclosure.
FIG. 4 is a diagram illustrating an example of the configuration of a server device according to an embodiment of the present disclosure.
FIG. 5 is a diagram illustrating an example of a data information storage unit according to an embodiment of the present disclosure.
FIG. 6 is a diagram illustrating an example of a model information storage unit according to an embodiment of the present disclosure.
FIG. 7 is a diagram illustrating an example of a threshold information storage unit according to an embodiment of the present disclosure.

FIG. 8 is a diagram illustrating an example of a network corresponding to a model.

FIG. 9 is a diagram illustrating an example of the configuration of a sensing device according to an embodiment of the present disclosure.

FIG. 10 is a diagram illustrating an example of a model information storage unit according to an embodiment of the present disclosure.

FIG. 11 is a flowchart illustrating processing by a server device according to an embodiment of the present disclosure.

FIG. 12 is a sequence diagram illustrating processing steps by an information processing system according to an embodiment of the present disclosure.

FIG. 13 is a hardware configuration diagram illustrating an example of a computer that implements functions of an information processing device such as a server device or a sensing device.

Description of Embodiments

Hereinafter, embodiments of the present disclosure are described in detail with reference to the drawings. Note that the learning device, the learning method, the sensing device, and the data collection method according to the present application are not limited to the embodiments. Further, in the following embodiments, the same parts are denoted with the same reference numerals and repeated explanation of these parts is omitted.

The present disclosure is described in the following order of items.

1. Embodiment

1-1. Overview of Learning Process According to Embodiment of Present Disclosure

    1-1-1. Background and Effects
    1-1-2. Influence Function
    1-1-2-1. Other Exemplary Methods
    1-1-3. Capacity Limit
    1-1-4. Storage
    1-1-5. Image Correction

1-2. Configuration of Information Processing System According to Embodiment
1-3. Configuration of Learning Device According to Embodiment
1-3-1. Model (network) Example
1-4. Configuration of Sensing Device According to Embodiment
1-5. Procedure of Information Processing According to Embodiment
1-5-1. Procedure of Processing Related to Learning Device
1-5-2. Procedure of Processing Related to Information Processing System

2. Other Embodiments

2-1. Other Configuration Examples
2-2. Others
3. Effects According to Present Disclosure
4. Hardware Configuration

[1. Embodiment]

[1-1. Overview of Learning Process According to Embodiment of Present Disclosure]

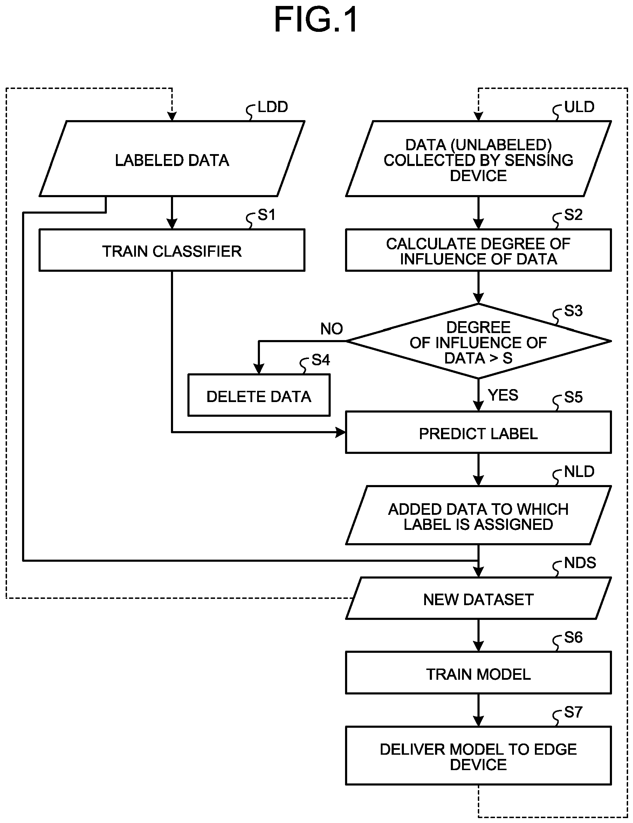

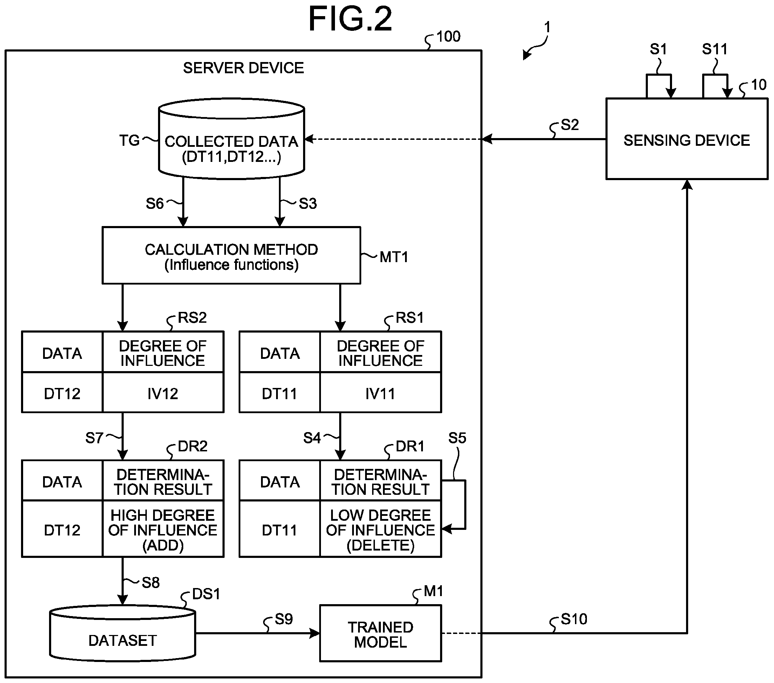

Hereinafter, an outline of processing performed by an information processing system 1 will be described with reference to FIGS. 1 and 2. FIG. 1 is a diagram illustrating an example of a processing flow of an information processing system according to an embodiment of the present disclosure. FIG. 2 is a diagram illustrating an example of a learning process according to an embodiment of the present disclosure. Further, FIG. 2 is a diagram illustrating an example of a learning process according to an embodiment of the present disclosure. The learning process according to the embodiment of the present disclosure is implemented by the information processing system 1 including a server device 100 and a sensing device 10 which are examples of a learning device. With reference to FIG. 2, an outline of the learning process implemented by the information processing system 1 is described.

Hereinafter, a case where the information processing system 1 trains a model used for image recognition is described as an example. For example, the information processing system 1 trains a discriminative model (hereinafter, also simply referred to as a "model") that is a deep neural network (DNN) performing image recognition. Note that the use of the model trained by the information processing system 1 is not limited to image recognition, and the information processing system 1 trains models used for various uses according to the purpose and use of the model to be trained. In addition, a case where data is image data will be described below as an example, but the data type is not limited to an image, and various types of data may be used according to the purpose and use of the model to be trained.

First, an outline of the processing flow is described with reference to FIG. 1. Processing that is described below as being mainly performed by the information processing system 1 may be conducted by any device included in the information processing system 1. For example, although the information processing system 1 principally performs the processing in FIG. 1, each processing illustrated in FIG. 1 may be performed by any of the server device 100 and the sensing device 10 of the information processing system 1.

FIG. 1 illustrates a case where the information processing system 1 performs processing using the following two sets of data: first data LDD that is data to which a label indicating a correct answer of the image recognition result is assigned (also referred to as "labeled data"); and second data ULD collected by the sensing device 10. The first data LDD is data already used as a dataset. The label may be any information that indicates a correct answer of the recognition result for the data. For example, the label may be information indicating a category to which the image belongs, information indicating an object contained in the image, information indicating an area of the object in the image, or the like. In addition, the second data ULD is data to which no label indicating a correct answer of the recognition result for the image is assigned (also referred to as "unlabeled data"). For example, a few-label learning process by the information processing system 1 is a learning process performed using both the labeled data and the unlabeled data as described above.

The information processing system 1 uses the first data LDD to train a classifier (Step S1). The information processing system 1 uses the first data LDD to train a classifier that classifies an image. For example, the information processing system 1 trains a classifier that receives an image as an input and outputs information indicating a category to which the input image belongs. The information processing system 1 uses image data included in the first data LDD and a label of the image data to train the classifier.

The information processing system 1 calculates a degree of influence of each set of data of the second data ULD (Step S2). A degree of influence of data is information indicating the degree of influence of the data on model training, and details thereof will be described later. Then, the information processing system 1 compares the calculated degree of influence of data with a threshold S (Step S3).

If the degree of influence of data is not greater than the threshold S (Step S3: No), then the information processing system 1 deletes the data (Step S4). For example, the information processing system 1 determines that, among the second data ULD, the data having a degree of influence equal to or less than the threshold S is data having a low degree of influence on learning (low influence data), and deletes the data.

On the other hand, if the degree of influence of data is greater than the threshold S (Step S3: Yes), then the information processing system 1 predicts a label of the data (Step S5). For example, the information processing system 1 determines that the data having a degree of influence greater than the threshold S is data having a high degree of influence on learning (high influence data), and predicts a label of the data. The information processing system 1 uses the classifier to predict a label of data that is unlabeled data and is high influence data among the second data ULD.

Then, the information processing system 1 assigns the predicted label (predicted label) to the data that is the target of prediction (prediction target data). Third data NLD is data to which a predicted label is assigned among the second data ULD. That is, the third data NLD is data that was unlabeled data but has become labeled data after being assigned a predicted label. The information processing system 1 generates a dataset NDS that is a new dataset from the third data NLD that has become labeled data and the first data LDD. The information processing system 1 generates a dataset NDS by adding the third data NLD that has become labeled data to the first data LDD. Note that the above is merely an example, and for example, in a case where a label is used to calculate a degree of influence, the information processing system 1 may predict a label of data before the calculation of a degree of influence and use the predicted label to calculate a degree of influence.

Then, the information processing system 1 uses the dataset NDS to train the model (Step S6). For example, the information processing system 1 uses the image data included in the dataset NDS and the label of the image data to train the model.

The information processing system 1 delivers the model to an edge device (Step S7). For example, the server device 100 of the information processing system 1 transmits the trained model to the sensing device 10 that is an edge device.

Then, the information processing system 1 repeats the processing of Steps S1 to S7 using, as the second data ULD, the data collected by the model delivered by the sensing device 10. Note that, in the repetitive processing, the information processing system 1 uses, as the first data LDD, the dataset NDS for the immediately preceding processing.

The information processing system 1 can update the model and improve the performance of the model by repeating the above-described processing (loop) at regular intervals (periodically).

An outline of the information processing in each device of the information processing system 1 is described below with reference to FIG. 2. Hereinafter, the model trained as in FIG. 2 is described as a model M1 that is a neural network used for image recognition.

The server device 100 illustrated in FIG. 2 is an information processing device that calculates a degree of influence of data collected by the sensing device 10 on model training by machine learning, and trains the model by using data in which the degree of influence satisfies a condition. The sensing device 10 illustrated in FIG. 2 is a device that collects image data. The sensing device 10 may be any device that can collect desired data by sensing and transmit the collected data to the server device 100. For example, the sensing device 10 may be a moving object, e.g., an unmanned aerial vehicle (UAV) such as a drone or a vehicle such as an automobile, a camera, or an image sensor (imager), and details of this point are described later.

The outline of the processing illustrated in FIG. 2 is described below. First, the sensing device 10 collects data by sensing (Step S1). The sensing device 10 then transmits the collected data (collected data TG) to the server device 100 (Step S2). The collected data TG includes data DT11 and data DT12 collected by the sensing device 10. For example, the data DT11 and the data DT12 are data to which no label is assigned (unlabeled data).

The server device 100 receives the collected data TG from the sensing device 10 to calculate a degree of influence of the data in the collected data TG (also referred to as "candidate data") on training of the model M1. For example, in a case where each set of candidate data in the collected data TG is added to a dataset DS1, the server device 100 calculates a degree of influence of the added candidate data on the training of the model M1. The server device 100 calculates the degree of influence of each set of candidate data in the dataset DS1 on the training of the model M1 using a method for calculating a degree of influence (calculation method MT1). The larger the value of the degree of influence herein, the higher a degree of contribution (contribution) of the data to the training of the model M1. The larger the value of the degree of influence, that is, the higher the degree of influence, the more it contributes to the improvement of the identification accuracy of the model M1. As described above, the higher the degree of influence is, the more the data is necessary for training of the model M1. For example, the higher the degree of influence is, the more the data is useful for training of the model M1.

Further, the lower the value of the degree of influence, the lower a degree of contribution (contribution) of the data to the training of the model M1. The smaller the value of the degree of influence, that is, the lower the degree of influence, the less it contributes to the improvement of the identification accuracy of the model M1. As described above, the lower the degree of influence is, the less the data is necessary for training of the model M1. For example, the lower the degree of influence is, the more the data is harmful for training of the model M1.

FIG. 2 illustrates a case where an influence function (influence functions) is used as an example of the calculation method MM1, but the influence function is described later. The calculation method MM1 used by the server device 100 for the calculation of a degree of influence is not limited to the influence function and any method may be used as long as a value indicating a degree of influence of each set of data can be acquired. For example, in a case where image data contains a recognition target, the server device 100 may calculate a degree of influence of the image data as a value greater than a predetermined threshold. In contrast, for example, in a case where image data contains no recognition target, the server device 100 may calculate a degree of influence of the image data as a value equal to or less than the predetermined threshold. For example, the server device 100 may calculate a degree of influence of data using a predetermined function. For example, the server device 100 may calculate a degree of influence of data using, as an input, a function that uses a value indicating whether the image data contains a recognition target, and outputs the degree of influence of image data. For example, the server device 100 may calculate a degree of influence of data by using a function that outputs a value greater than the predetermined threshold when the image data contains a recognition target and outputs a value equal to or less than the predetermined threshold when the image data contains no recognition target. The server device 100 performs the following processing using the calculation method MM1 with the data DT11 and the data DT12 in the collected data TG used as the candidate data.

The server device 100 calculates a degree of influence of the data DT11 in the collected data TG on the training of the model M1 (Step S3). As indicated by a calculation result RS1, the server device 100 calculates the degree of influence of the data DT11 on the training of the model M1 as a degree of influence IV11. The degree of influence IV11 is assumed to be a specific value (for example, 0.3 or the like). For example, the server device 100 predicts a label of the data DT11 using the classifier. For example, the server device 100 predicts the label of the data DT11 using a model M2 that is the classifier. For example, the server device 100 calculates the degree of influence IV11 of the data DT11 using the dataset DS1 for a case where the data DT11 to which the predicted label is assigned is added.

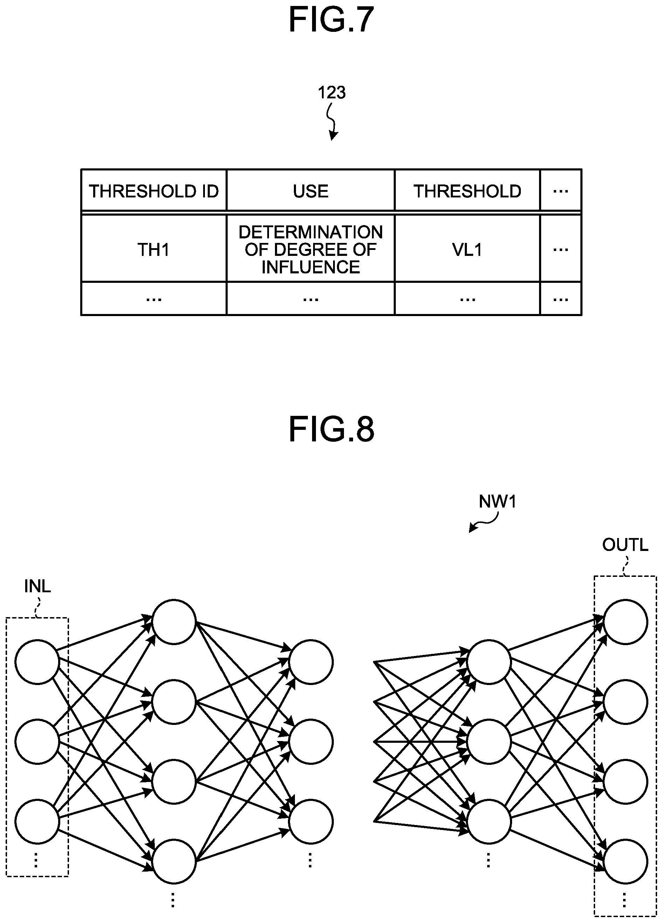

Then, the server device 100 determines the data DT11 based on the degree of influence IV11 of the data DT11 (Step S4). The server device 100 determines whether the data DT11 is necessary for training of the model M1 based on the degree of influence IV11 of the data DT11 and a threshold TH1. For example, the server device 100 determines whether the data DT11 is necessary for training of the model M1 using the threshold TH1 stored in a threshold information storage unit 123 (see FIG. 7).

For example, the server device 100 compares the degree of influence IV11 of the data DT11 with the threshold TH1, and determines that the data DT11 is unnecessary for training of the model M1 in a case where the degree of influence IV11 is equal to or less than the threshold TH1. In FIG. 2, since the degree of influence IV11 of the data DT11 is equal to or less than the threshold TH1, the server device 100 determines that the data DT11 is unnecessary for training of the model M1. Therefore, as indicated in determination information DR1, the server device 100 determines that the degree of influence of the data DT11 on the training of the model M1 is low and deletes the data DT11 (Step S5).

Further, in FIG. 2, the server device 100 calculates a degree of influence of the data DT12 in the collected data TG on the training of the model M1 (Step S6). As indicated by a calculation result RS2, the server device 100 calculates the degree of influence of the data DT12 on the training of the model M1 as a degree of influence IV12. The degree of influence IV12 is assumed to be a specific value (for example, 0.8 or the like). For example, the server device 100 predicts a label of the data DT12 using the classifier. For example, the server device 100 predicts the label of the data DT12 using the model M2 that is the classifier. For example, the server device 100 calculates the degree of influence IV12 of the data DT12 using the dataset DS1 for a case where the data DT12 to which the predicted label is assigned is added.

Then, the server device 100 determines the data DT12 based on the degree of influence IV12 of the data DT12 (Step S7). The server device 100 determines whether the data DT12 is necessary for training of the model M1 based on the degree of influence IV12 of the data DT12. For example, the server device 100 determines whether the data DT12 is necessary for training of the model M1 based on the degree of influence IV12 of the data DT12 and the threshold TH1.

For example, the server device 100 compares the degree of influence IV12 of the data DT12 with the threshold TH1, and determines that the data DT12 is necessary for training of the model M1 in a case where the degree of influence IV12 is greater than the threshold TH1. In FIG. 2, since the degree of influence IV12 of the data DT12 is greater than the threshold TH1, the server device 100 determines that the data DT12 is necessary for training of the model M1.

Therefore, as indicated in determination information DR2, the server device 100 determines that the degree of influence of the data DT12 on the training of the model M1 is high and adds the data DT12 to the dataset DS1 (Step S8). The server device 100 adds, to the dataset DS1, the data DT12 to which the label predicted using the model M2 is assigned.

Then, the server device 100 generates a model using the dataset DS1 (Step S9). In the example of FIG. 2, the server device 100 generates the model M1 using the dataset DS1 including the data DT12 to which the predicted label is assigned. In this manner, the server device 100 generates the model M1 by few-label learning using the dataset DS1 including the labeled data and the data DT12 that is originally unlabeled data.

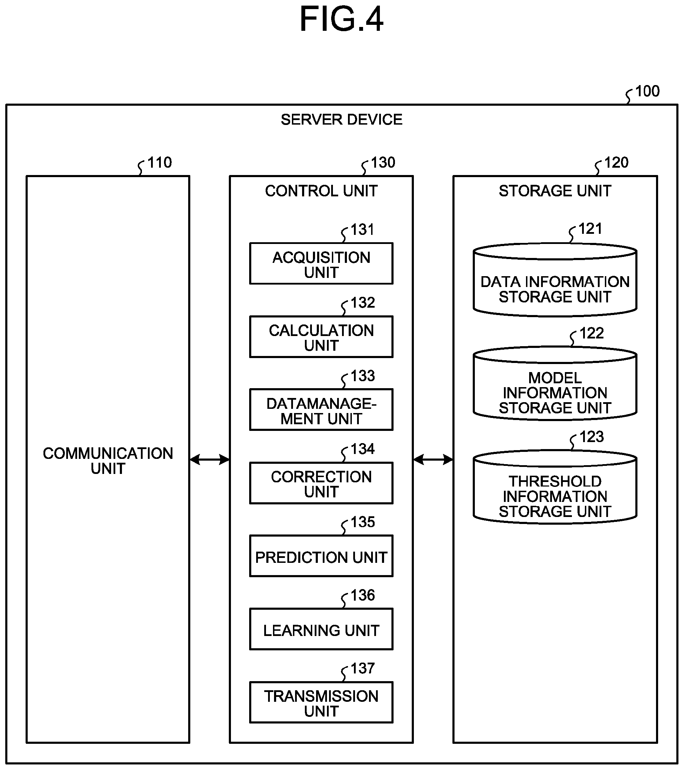

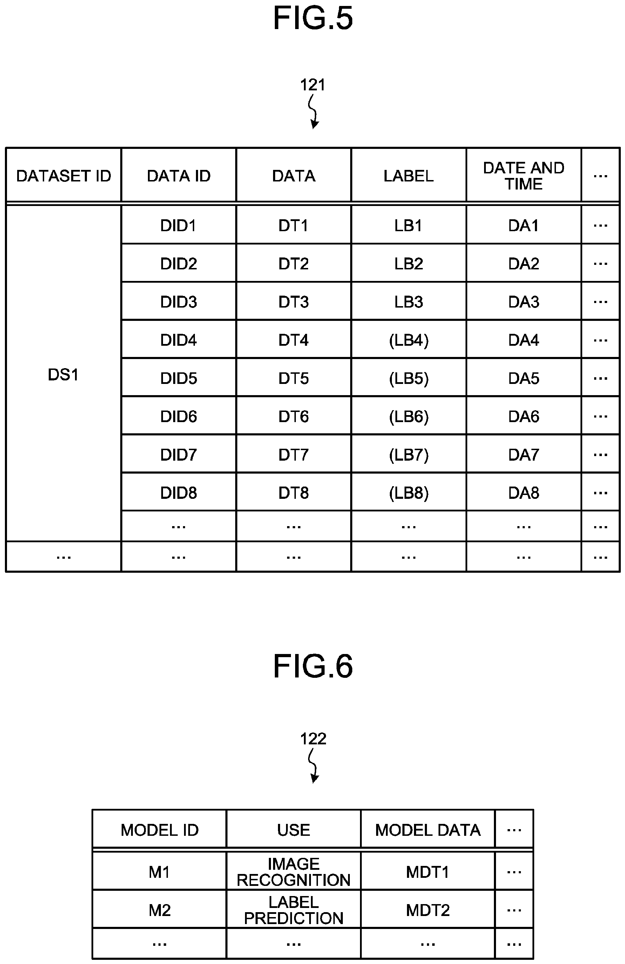

In the example of FIG. 2, the server device 100 designs a structure of a network (neural network or the like) corresponding to the model M1 stored in a model information storage unit 122 (see FIG. 6). The server device 100 designs a structure of a network (network structure) of the model M1 used for image recognition. For example, the server device 100 may generate the network structure of the model M1 used for image recognition based on information regarding a network structure corresponding to each purpose stored in advance in a storage unit 120 (see FIG. 4). For example, the server device 100 may acquire, from an external device, information on a network structure of the model M1 used for image recognition.

For example, the server device 100 trains the model M1 by using the dataset DS1 in which a label (correct answer label) indicating the presence or absence of a person is correlated with each set of data (image). The server device 100 uses the dataset DS1 to perform learning process so as to minimize the set loss function (loss function), and trains the model M1.

For example, the server device 100 trains the model M1 by updating parameters such as a weight and a bias so that an output layer has a correct value with respect to the input of data. For example, in the backpropagation method, a loss function indicating how far the value of the output layer is from the correct state (correct answer label) is used for the neural network, and the weight and bias are updated so that the loss function is minimized using the steepest descent method, for example. For example, the server device 100 gives an input value (data) to the neural network (model M1), the neural network (model M1) calculates a predicted value based on the input value, and comparison is made between the predicted value and teaching data (correct answer label) to evaluate an error. Then, the server device 100 executes training and construction of the model M1 by sequentially correcting a value of a combined load (synapse coefficient) in the neural network (model M1) based on the obtained error. Note that the above is an example, and the server device 100 may perform learning process on the model M1 by various methods. In addition, the server device 100 may use the model generated at the calculation of the degree of influence in Step S6 as the model M1 trained by the dataset DS1 including the data DT12.

Then, the server device 100 transmits the generated model M1 to the sensing device 10 (Step S10). The information processing system 1 repeats the data collection and model update by repeating the processing of Steps S1 to S10. For example, the sensing device 10 collects data by sensing using the model M1 received from the server device 100 (Step S11). For example, in a case where the sensing device 10 is a moving object, the sensing device 10 performs sensing (human recognition or the like) using the model M1 to perform processing such as autonomous travel. The sensing device 10 transmits the data collected by sensing using the model M1 to the server device 100.

In the above example, the server device 100 generates a trained model by the few-label learning process using unlabeled data having a degree of influence greater than the threshold TH1. That is, the few-label learning process is performed using a data group not all of which is labeled in advance. For example, the few-label learning process is a learning process of using the unlabeled data collected by the sensing device 10 to predict a label of the unlabeled data and assigning the predicted label to the unlabeled data to thereby use the unlabeled data as the labeled data. Through the processing described above, the information processing system 1 generates a model using data having a degree of influence greater than the threshold among the data collected by the sensing device 10. As a result, the server device 100 can generate a model using appropriate data by using data having a high degree of influence. It is therefore possible for the server device 100 to make a model generated using appropriate data available. For example, the information processing system 1 uploads the data collected by a sensor device such as the sensing device 10 to the server device 100. The information processing system 1 then trains the model and delivers the trained model to the sensor device such as the sensing device 10. Then, the sensor device such as the sensing device 10 performs sensing with the updated trained model. The information processing system 1 can update the model and improve the performance of the model by repeating the above-described processing loop at regular intervals.

[1-1-1. Background and Effects]

Here, the background, effects, and the like of the information processing system 1 described above is described. The progress in deep learning technology has enabled recognition of objects more accurately than humans. However, models used in edge devices are models trained by developers, and do not adapt to changes in data in the real world. Deep learning requiring a large amount of data needs new data to respond to changing circumstances. However, as things stand now, models created by developers are still in use.

Conventionally, models are constructed by learning based on data collected by developers. However, it is impossible to update the trained model after it is released to the real world. The reason for this may be that relearning cannot be performed in an environment with an edge device, additional data is not collected in real time, or the like.

Such a problem can be solved not only by the environment of the edge device but also by a cooperation system with learning on the server. The workflow is to collect new data in the operating environment of the edge device. The data is uploaded to the server for relearning. In such a case, learning is performed by extracting data having a high degree of influence on the model without learning all data. In addition, because of the few-label learning, no label is required for the data. The model is updated with additional data to the original model through transfer learning, and the resultant is delivered to the edge device.

The above-described processing enables the information processing system 1 to perform learning with only a small amount of data necessary for learning without a label. Further, the model efficiently calculated and retrained by the server device 100 is delivered to the edge device such as the sensing device 10 and can be used immediately. For example, in the information processing system 1, the model can be automatically made to grow by repeating the loop at regular intervals.

The information processing system 1 can automatically update the trained model. For example, the information processing system 1 uploads images collected by sensing to the server device 100, calculates a degree of influence of the data, and extracts data having a high degree of influence. The information processing system 1 performs transfer learning using the data to update the model. Thereafter, the information processing system 1 delivers the model to the sensing device 10 and updates the trained model. The information processing system 1 can perform learning in the server device 100 even without a label by the few-label learning.

For example, learning all sets of the data collected by the sensing device is unrealistic because the calculations are huge. In view of this, the information processing system 1 calculates a degree of influence of data and performs learning only data having a high degree of influence on the model. In addition, the information processing system 1 does not need a label of data because of the few-label learning. The information processing system 1 can perform learning only a small amount of data necessary for learning without a label.

[1-1-2. Influence function]

The following is a description of each method in the information processing system 1. First, the influence function is described. The information processing system 1 quantitatively analyzes an influence of data on a model (parameter) generated by the influence function.

For example, the information processing system 1 formulates influence of the presence or absence of certain (training) data on the accuracy (output result) of the model using the influence function. For example, the information processing system 1 uses a model trained using a dataset to which the target data for influence calculation is added to calculate a degree of influence of the added data on learning. Hereinafter, calculation of the degree of influence using the influence function is described using a formula or the like.

The influence function is also used, for example, as a method for explaining a black box model of machine learning.

The influence function is disclosed in, for example, the following document.

·Understanding Black-box Predictions via Influence Functions, Pang Wei Kho and Percy Liang <https://arxiv.org/abs/1703.04730>

The information processing system 1 can calculate a degree of influence of data on machine learning by using the influence function, and can calculate (grasp) the extent of a positive influence or negative influence of certain data. For example, the information processing system 1 calculates (measures) a degree of influence with an algorithm, data, or the like as described below. Hereinafter, a case where an image is used as input data is described as an example.

For example, an input x (image) is regarded as a prediction problem in machine learning based on an output y (label). Each image is assigned a label, that is, an image and a correct answer label are correlated with each other. For example, assuming that there are n (n is an arbitrary natural number) sets of images and labels (datasets), each labeled image z (which may be simply referred to as "image z") is as in the following formula (1).

$$z_1, z_2, \cdots, z_n \qquad z_i = (x_i, y_i) \in X \times Y \qquad \cdots (1)$$

Here, assuming that a loss at a parameter $\theta \in \Theta$ of the model at a certain point z (image z) is L (z, $\theta$), the experience loss in all the n sets of data can be expressed as the following formula (2).

$$\frac{1}{n} \sum_{i=1}^{n} L(z_i, \theta) \qquad \cdots (2)$$

The minimization of the experience loss means finding (determining) a parameter that minimizes the loss, and thus can be expressed as the following formula (3).

$$\hat{\theta} \equiv argmin_{\theta \in \Theta} \frac{1}{n} \sum_{i=1}^{n} L(z_i, \theta) \qquad \cdots (3)$$

For example, the information processing system 1 calculates a parameter ((left side of formula (3))) that minimizes the loss using the formula (3). Here, it is assumed that the experience loss is second-order differentiable and is a convex function with respect to the parameter $\theta$. Hereinafter, how to perform the calculations with the aim of understanding a degree of influence of certain data that is the training point for the machine learning model is described. If there is no data for a certain training point, what kind of influence is given to the machine learning model will be considered.

Note that a parameter (variable) in which "^" (hat) is added above a certain character, such as a parameter (variable) in which "^" is added above "0" indicated on the left side of the formula (3), represents, for example, a predicted value. Hereinafter, when the parameter (variable) in which "^" is added above "0" indicated on the left side of the formula (3) is referred to in the sentence, it is expressed as "θ ^" in which "^" is written following "0". In a case where a certain training point z (image z) is removed from the machine learning model, it can be expressed as the following formula (4).

$$\hat{\theta}_{-z} \equiv argmin_{\theta \in \Theta} \frac{1}{n} \sum_{z_i \neq z} L(z_i, \theta) \qquad \cdots (4)$$

For example, the information processing system 1 calculates a parameter (left side of formula (4)) for a case of learning using the formula (4) without using certain training data (image z). For example, a degree of influence is a gap (difference) between a case where the training point z (image z) is removed and a case where there are all data points including the training point z. The difference is shown in the following formula (5).

$$\hat{\theta}_{-z} - \hat{\theta} \qquad \cdots (5)$$

Then, the information processing system 1 uses the influence functions to perform an operation for a case where the image z is removed by effective approximation as described below.

This idea is a method of calculating a change in parameter assuming that the image z is weighted by minute $\epsilon$. Here, a new parameter (left side of formula (6)) is defined using the following formula (6).

$$\hat{\theta}_{\epsilon,z} \equiv argmin_{\theta \in \Theta} \frac{1}{n} \sum_{i=1}^{n} L\left(z_i, \theta\right) + \epsilon L(z, \theta) \qquad \cdots (6)$$

By utilizing the results of a prior study by Cook and Weisberg in 1982, the degree of influence of the weighted image z with the parameter $\theta$^ ((left side of formula (3))) can be written as in the following formulas (7) and (8).

$$I_{up,params}(z) \equiv \frac{d\hat{\theta}_{\epsilon,z}}{d\epsilon}\Big|_{\epsilon=0} = -H_{\hat{\theta}}^{-1} \nabla_\theta L\left(z, \hat{\theta}\right) \qquad \cdots (7)$$

$$H_{\hat{\theta}} \equiv \frac{1}{n} \sum_{i=1}^{n} \nabla_\theta^2 L\left(z_i, \hat{\theta}\right) \qquad \cdots (8)$$

Incidentally, the prior study by Cook and Weisberg is disclosed in, for example, the following document.

·Residuals and Influence in Regression, Cook, R.D. and Weisberg, S <https://conservancy.umn.edu/handle/11299/37076>

For example, the formula (7) represents an influence function corresponding to the certain image z. For example, the formula (7) represents a change amount of a parameter with respect to minute $\epsilon$. In addition, for example, the formula (8) represents Hessian (Hessian matrix). Here, it is assumed that the matrix is a Hessian matrix having a positive definite value, and an inverse matrix also exists. Assuming that removing a data point z (image z), which is a certain point, is the same as being weighted by "$\epsilon = -1/n$", the parameter change for a case where the image z is removed can be approximately expressed by the following formula (9).

$$\hat{\theta}_{-z} - \hat{\theta} \approx -\frac{1}{n} I_{up,params}(z) \qquad \cdots (9)$$

As a result, the information processing system 1 can calculate (obtain) a degree of influence for a case where the data point z (image z) is removed.

Next, the information processing system 1 calculates (obtains) a degree of influence on a loss at a certain test point $z_{test}$ by using the following formulas (10-1) to (10-3).

$$I_{up,loss}(z, z_{test}) \equiv \frac{dL(z_{test}, \hat{\theta}_{\epsilon,z})}{d\epsilon}\Big|_{\epsilon=0} \qquad \cdots (10\text{-}1)$$

$$= \nabla_\theta L(z_{test}, \hat{\theta})^T \frac{d\hat{\theta}_{\epsilon,z}}{d\epsilon}\Big|_{\epsilon=0} \qquad \cdots (10\text{-}2)$$

$$= -\nabla_\theta L(z_{test}, \hat{\theta})^T H_{\hat{\theta}}^{-1} \nabla_\theta L(z, \hat{\theta}) \qquad \cdots (10\text{-}3)$$

In this manner, a degree of influence of the weighted image z at the certain test point $z_{test}$ can be formulated. Therefore, the information processing system 1 can calculate (obtain) a degree of influence of data in the machine learning model by the calculation. For example, the right side of the formula (10-3) includes a gradient with respect to loss (loss) of certain data, an inverse matrix of Hessian, a gradient of loss of certain training data, and the like. For example, an influence of certain data on the prediction (loss) of the model can be obtained by the formula (10-3). Note that the above is an example, and the information processing system 1 may appropriately perform various operations to calculate a degree of influence of each image on learning.

[1-1-2-1. Other Exemplary Methods]

The influence function described above is merely an example, and the method used for calculating a degree of influence is not limited to the influence function. An example in this regard is described below.
For example, the information processing system 1 may calculate a degree of influence by using a method related to the stochastic gradient descent (SGD) method. For example, the information processing system 1 may calculate a degree of influence using various methods related to the stochastic gradient descent (SGD) method disclosed in the following documents.

-Data Cleansing for Models Trained with SGD, Satoshi Hara, Atsushi Nitanda and Takanori Maehara <https://proceedings.neurips.cc/paper/2019/file/5f146156966 49541a025d3d0f8e0447f-Paper.pdf>
·Data Cleansing for Deep Neural Networks with Storage-efficient Approximation of Influence Functions, Kenji Suzuki, Yoshiyuki Kobayashi and Takuya Narihira <https://arxiv.org/abs/2103.11807v2>
-Data Cleansing, Kenji Suzuki <https://github.com/sony/nnabla-examples/tree/master/responsible_ai/data_cleansing>

Further, the information processing system 1 may calculate a degree of influence using a method disclosed in the following documents.

-Estimating Training Data Influence by Tracing Gradient Descent, Garima Pruthi, Frederick Liu, Mukund Sundararajan and Satyen Kale <https://arxiv.org/pdf/2002.08484.pdf>
·TracIn, Yukio Oobuchi <https://github.com/sony/nnabla-examples/tree/master/responsible_ai/tracin>

Further, the information processing system 1 may calculate a degree of influence using a method disclosed in the following documents.

·Representer Point Selection for Explaining Deep Neural Networks, Chih-Kuan Yeh, Joon Sik Kim, Ian E.H. Yen and Pradeep Ravikumar <https://arxiv.org/abs/1811.09720>

Note that the above is merely an example, and the information processing system 1 may calculate a degree of influence by any method that can calculate the degree of influence.

[1-1-3. Capacity Limit]

Next, a point related to data volume is described. A huge capacity of HDD cache is necessary in the calculation of a degree of influence of data. If there were an infinite number of HDDs, there is no problem, but realistically, the capacity is limited.
In light of the above, the information processing system 1 may reduce the data volume by arbitrarily adopting a cache reduction method. For example, the information processing system 1 may perform cache reduction based on a method disclosed in the following document.

· Data Cleansing for Deep Neural Networks with Storage-efficient Approximation of Influence Functions, Kenji Suzuki, Yoshiyuki Kobayashi, and Takuya Narihira Wei Kho and Percy Liang <https://arxiv.org/abs/2103.11807>

In this case, the information processing system 1 calculates a degree of influence of data that can be stored within a limited HDD capacity. Note that the system configuration is feasible without the cache reduction method, but the amount of calculation is limited. Therefore, in the cache reduction, it is possible to reduce by 1/1,000 or more, and many degrees of influence of data can be calculated at the time of actual implementation. In the cache reduction method, after the calculation, cache files are reduced, and the degrees of influence of data are calculated one after another. That is, the cache reduction method can calculate more degrees of influence of data. As a result, the information processing system 1 can efficiently use the limited HDD capacity, and can calculate more degrees of influence of data.

[1-1-4. Storage]

Next, a point related to data storage is described. Repeated automatic update calculates large amounts of data sequentially. The problem that it is difficult to know which data was used arises, and transparency of artificial intelligence (AI) cannot be achieved.
Therefore, the information processing system 1 records a log of training data in the server device 100. Specifically, the information processing system 1 uses, for learning, data determined to be necessary for learning after the calculation of the degree of influence and stores the data into the server device 100. The information processing system 1 also records, in the server device 100, a date and time of update used for learning.

[1-1-5. Image Correction]

Next, a point related to correction of image data is described. The data collected from the real world in an edge device such as the sensing device 10 may differ in terms of brightness, contrast, chromaticity, and the like of the image from the data used at the time of training the first model. This is due to differences in a camera, a photographing condition, and the like. In such a case, the learning model cannot exhibit appropriate performance in some cases.
Therefore, the information processing system 1 adjusts brightness, contrast, chromaticity, and the like of the image in the edge device in the learning process in the server device 100. For example, in the information processing system 1, a switch for a graphical user interface (GUI) or the like is provided in a device so that an image can be adjusted. Then, the information processing system 1 can generate a more optimized model by calculating a degree of influence of the processed data and performing relearning by transfer learning.

[1-2. Configuration of Information Processing System According to Embodiment]

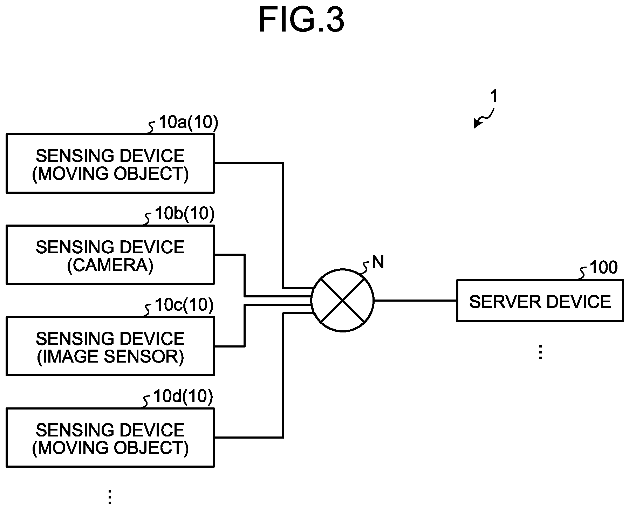

The information processing system 1 illustrated in FIG. 3 is described. The information processing system 1 is an information processing system that implements adjustment processing for adjusting training data. As illustrated in FIG. 3, the information processing system 1 includes the server device 100 and a plurality of sensing devices 10a, 10b, 10c, and 10d. Note that, in a case where the sensing devices 10a, 10b, 10c, 10d, and the like are not distinguished from each other, they may be referred to as sensing devices 10. Although the four sensing devices 10a, 10b, 10c, and 10d are illustrated in FIG. 3, the information processing system 1 may include more than four (for example, 20 or 100 or more) sensing devices 10. The sensing devices 10 and the server device 100 are communicably connected to each other by wire or wirelessly via a predetermined communication network (network N). FIG. 3 is a diagram illustrating an example of the configuration of an information processing system according to an embodiment. Note that the information processing system 1 illustrated in FIG. 3 may include a plurality of server devices 100.
The server device 100 is an information processing device (learning device) that calculates a degree of influence of data included in a dataset used for model training by machine learning on learning, and trains the model by using data in which a degree of influence satisfies a condition. The server device 100 provides the model to the sensing device 10.
The sensing device 10 is a computer that provides data to the server device 100. In the example of FIG. 3, the sensing device 10a is a moving object, e.g., a UAV such as a drone or a vehicle such as an automobile. For example, the sensing device 10a may have a function of communicating with the server device 100 and move according to a request from the server device 100. The sensing device 10a has an imaging function of an image sensor (imager) or the like, moves to a position according to a request from the server device 100, captures an image or a moving image at the position, and transmits the captured image or moving image to the server device 100. Note that the sensing device 10a and the moving object may be separate devices. In this case, the sensing device 10a may be a device mounted on a moving object, e.g., a UAV such as a drone or a vehicle such as an automobile.
Further, in the example of FIG. 3, the sensing device 10b is a camera having an imaging function. The sensing device 10b is a camera that captures a moving image or an image to hold captured data.

In the example of FIG. 3, the sensing device 10c is an image sensor (imager) having an imaging function. For example, the sensing device 10c has a function of communicating with the server device 100 and a function of transmitting a captured image or moving image to the server device 100. For example, the sensing device 10c captures an image or a moving image according to a request from the server device 100, and transmits the captured image or moving image to the server device 100.

In the example of FIG. 3, the sensing device 10d is a moving object, e.g., a UAV such as a drone or a vehicle such as an automobile, as with the sensing device 10a. As described above, the information processing system 1 may include the plurality of sensing devices 10 of the same type. In this case, the information processing system 1 may generate a model based on data collected for each sensing device 10 and provide a model for each sensing device 10. In addition, the information processing system 1 may generate a model common to the plurality of sensing devices 10 of the same type and provide the common model to the plurality of sensing devices 10 of the same type. Since the sensing device 10d is similar to the sensing device 10a in terms of the communication function, the configuration, and the like, description thereof is omitted.

Note that the sensing device 10 may be any device that can implement the processing in the embodiment. The sensing device 10 may be, for example, a device such as a smartphone, a tablet terminal, a laptop personal computer (PC), a desktop PC, a mobile phone, or a personal digital assistant (PDA). The sensing device 10 may be a wearable terminal (wearable device) or the like worn by a user. For example, the sensing device 10 may be a wristwatch-type terminal, a glasses-type terminal, or the like. Further, the sensing device 10 may be a so-called home appliance such as a television or a refrigerator. For example, the sensing device 10 may be a robot that interacts with a human (user), such as a smart speaker, an entertainment robot, or a home robot. Further, the sensing device 10 may be a device disposed at a predetermined location, such as a digital signage.

[1-3. Configuration of Learning Device According to Embodiment]

Next, a configuration of the server device 100, which is an example of a learning device that executes a learning process according to the embodiment, is described. FIG. 4 is a diagram illustrating an example of the configuration of the server device 100 according to an embodiment of the present disclosure.

As illustrated in FIG. 4, the server device 100 includes a communication unit 110, a storage unit 120, and a control unit 130. Note that the server device 100 may include an input unit (for example, a keyboard, a mouse, or the like) that receives various operations from an administrator or the like of the server device 100, and a display unit (for example, a liquid crystal display or the like) for displaying various types of information.

The communication unit 110 is implemented by, for example, a network interface card (NIC), or the like. The communication unit 110 is connected to the network N (see FIG. 3) by wire or wirelessly, and transmits and receives information to and from another information processing device such as the sensing device 10. Further, the communication unit 110 may transmit and receive information to and from the sensing device 10.

The storage unit 120 is implemented by, for example, a semiconductor memory device such as a random access memory (RAM) or a flash memory, or a storage device such as a hard disk or an optical disk. As illustrated in FIG. 4, the storage unit 120 according to the embodiment includes a data information storage unit 121, the model information storage unit 122, the threshold information storage unit 123, and a knowledge information storage unit 125.

The data information storage unit 121 according to the embodiment stores various types of information regarding data used for learning. The data information storage unit 121 stores a dataset used for learning. FIG. 5 is a diagram illustrating an example of a data information storage unit according to an embodiment of the present disclosure. For example, the data information storage unit 121 stores various types of information regarding various types of data such as data for learning used for learning and data for evaluation used for accuracy evaluation (calculation). FIG. 5 illustrates an example of the data information storage unit 121 according to the embodiment. In the example of FIG. 5, the data information storage unit 121 includes items such as "dataset ID", "data ID", "data", "label", and "date and time".

The "dataset ID" indicates identification information for identifying a dataset. The "data ID" indicates identification information for identifying data. The "data" indicates data identified by the data ID.

The "label" indicates a label (correct answer label) assigned to the corresponding data. For example, the "label" may be information (correct answer information) indicating a classification (category) of the corresponding data. For example, the "label" is correct answer information (correct answer label) indicating what kind of object is contained in the data (image). For example, in a case where there is a label in data, the label is stored in correlation with the data. In a case where there is no label in data, a label (predicted label) predicted for the data is stored in correlation with the data. FIG. 5 illustrates a case where a label in parentheses is a predicted label, and illustrates a case where labels LB4 to LB8 are predicted labels. As in the example of FIG. 5, the server device 100 predicts a label not only for a small number of sets of labeled data to which a label is assigned but also for a large number of sets of unlabeled data, and assigns the predicted labels to the data, thereby using the data as labeled data for learning.

The "date and time" indicates a time (date and time) related to the corresponding data. In the example of FIG. 5, although the "date and time" is illustrated with "DA1" or the like, the "date and time" may be a specific date and time such as "15:22:35 on August 1, 2021", and information indicating for which model training the data was first used, such as "use started from model training of version XX" may be stored.

The example of FIG. 5 indicates that the dataset (dataset DS1) identified by the dataset ID "DS1" includes a plurality of sets of data identified by the data IDs "DID1", "DID2", "DID3", and the like. For example, each set of data (data for learning) identified by the data IDs "DID1", "DID2", "DID3", and the like is image information or the like used for model training.

For example, data DT1 identified by the data ID "DID1" is labeled data to which a label LB1 is assigned, and indicates that the use has been started since model training at the date and time DA1. Further, for example, data DT4 identified by the data ID "DID4" is data collected as unlabeled data and to which a label LB4 that is a predicted label is assigned, and indicates that the use has been started since model training at the date and time DA4.

Note that the data information storage unit 121 is not limited to the above, and may store various types of information according to the purpose. For example, the data information storage unit 121 may store data in such a way to identify whether each set of data is data for learning or data for evaluation. For example, the data information storage unit 121 stores the data for learning and the data for evaluation in a distinguishable manner. The data information storage unit 121 may store information for identifying whether each set of data is the data for learning or the data for evaluation. The server device 100 trains the model based on each set of data used as the data for learning and the correct answer information. The server device 100 calculates the accuracy of the model based on each set of data used as the data for evaluation and the correct answer information. The server device 100 calculates the accuracy of the model by collecting a result obtained by comparing an output result output from the model when the data for evaluation is input with the correct answer information.

The model information storage unit 122 according to the embodiment stores information related to the model. For example, the model information storage unit 122 stores information (model data) indicating a structure of the model (network). FIG. 6 is a diagram illustrating an example of a model information storage unit according to an embodiment of the present disclosure. FIG. 6 illustrates an example of the model information storage unit 122 according to the embodiment. In the example illustrated in FIG. 6, the model information storage unit 122 includes items such as "model ID", "use", and "model data".

The "model ID" indicates identification information for identifying a model. The "use" indicates a purpose of the corresponding model. The "model data" indicates model data. Although FIG. 6 illustrates an example in which conceptual information such as "MDT1" is stored in the "model data", but actually, various types of information constituting the model, such as information regarding a network included in the model and a function, are included.

In the example illustrated in FIG. 6, the use of a model identified by the model ID "M1" (model M1) is indicated to be "image recognition". The model M1 is indicated to be a model used for image recognition. Further, the model data on the model M1 is indicated to be the model data MDT1.

Further, the use of a model identified by the model ID "M2" (model M2) is indicated to be "label prediction". The model M2 is indicated to be a model used for label prediction. For example, the model M2 is a classifier to predict a label of unlabeled data. Further, the model data on the model M2 is indicated to be model data MDT2.

Note that the model information storage unit 122 is not limited to the above, and may store various types of information according to the purpose. For example, the model information storage unit 122 stores parameter information of a model trained (generated) through the learning process.

The threshold information storage unit 123 according to the embodiment stores various types of information related to the threshold. The threshold information storage unit 123 stores various types of information on a threshold used for comparison with a score. FIG. 7 is a diagram illustrating an example of a threshold information storage unit according to an embodiment. The threshold information storage unit 123 illustrated in FIG. 7 includes items such as "threshold ID", "use", and "threshold".

The "threshold ID" indicates identification information for identifying a threshold. The "use" indicates a purpose of the threshold. The "threshold" indicates a specific value of the threshold identified by the corresponding threshold ID.

In the example of FIG. 7, a threshold (threshold TH1) identified by the threshold ID "TH1" is stored in correlation with information indicating the use for determination of a degree of influence. That is, the threshold TH1 is used to determine whether a degree of influence of target data is high. Then, data determined to have a high degree of influence is added to the dataset, and data determined to have a low degree of influence is deleted. The value of the threshold TH1 is indicated to be "VL1". In the example of FIG. 7, the threshold TH1 is indicated by an abstract sign such as "VL1", but the value of the threshold TH1 is a specific numerical value (for example, 0.6 or the like).

Note that the threshold information storage unit 123 is not limited to the above, and may store various types of information according to the purpose.

Returning to FIG. 4, the description is continued. The control unit 130 is implemented, for example, in response to a program (for example, an information processing program such as a learning process program according to the present disclosure) stored in the server device 100 executed by a central processing unit (CPU), a micro processing unit (MPU), or the like using a random access memory (RAM) as a work area. Alternatively, the control unit 130 is a controller, and is implemented, for example, by an integrated circuit such as an application specific integrated circuit (ASIC) or a field programmable gate array (FPGA).

As illustrated in FIG. 4, the control unit 130 includes an acquisition unit 131, a calculation unit 132, a data management unit 133, a correction unit 134, a prediction unit 135, a learning unit 136, and a transmission unit 137, and implements or executes a function and an action of information processing described below. The internal configuration of the control unit 130 is not limited to the configuration illustrated in FIG. 4, and may be another configuration that performs information processing to be described later. Further, the connection relationship of the processing units included in the control unit 130 is not limited to the connection relationship illustrated in FIG. 4, and may be another connection relationship.

The acquisition unit 131 acquires various types of information. The acquisition unit 131 acquires various types of information from the storage unit 120. The acquisition unit 131 acquires various types of information from the data information storage unit 121, the model information storage unit 122, and the threshold information storage unit 123.

The acquisition unit 131 receives various types of information from an external information processing device. The acquisition unit 131 receives various types of information from the sensing device 10.

The acquisition unit 131 acquires various types of information calculated by the calculation unit 132. The acquisition unit 131 acquires various types of information corrected by the correction unit 134. The acquisition unit 131 acquires various types of information predicted by the prediction unit 135. The acquisition unit 131 acquires various types of information learned by the learning unit 136.

The calculation unit 132 calculates various types of processing. The calculation unit 132 calculates a degree of influence of training data used for learning of the neural network on learning. The calculation unit 132 calculates various types of processing based on information from an external information processing device. The calculation unit 132 calculates various types of processing based on the information stored in the storage unit 120. The calculation unit 132 calculates various types of processing based on the information stored in the data information storage unit 121, the model information storage unit 122, and the threshold information storage unit 123. The calculation unit 132 generates various types of information by calculating processing.

The calculation unit 132 calculates various types of processing based on various types of information acquired by the acquisition unit 131. The calculation unit 132 calculates a degree of influence of the data collected by the sensing device 10 on model training by machine learning. The calculation unit 132 calculates a degree of influence based on the loss function. The calculation unit 132 calculates a degree of influence by the influence function. The calculation unit 132 calculates a degree of influence of image data collected by the image sensor. The calculation unit 132 calculates a degree of influence of data collected by the sensing device 10, which is an external device, using the trained model.

The data management unit 133 executes various processing related to data management. The data management unit 133 determines data. The data management unit 133 determines the data collected by the sensing device 10. The data management unit 133 determines whether each set of data is necessary based on the degree of influence of each set of data. The data management unit 133 deletes data in which a degree of influence does not satisfy the condition. The data management unit 133 stores data in which a degree of influence satisfies the condition into the storage unit 120.

The data management unit 133 adds data to the dataset based on the calculation result by the calculation unit 132. The data management unit 133 adds, to the dataset, the data determined to have a high degree of influence. The data management unit 133 sets the data determined to have a high degree of influence as target data and adds, to the dataset, the target data to which a predicted label predicted by the prediction unit 135 is assigned. The data management unit 133 correlates the data determined to have a high degree of influence with the predicted label of the data and adds the resultant to the dataset.

The correction unit 134 corrects various types of data. The correction unit 134 corrects data collected by the sensing device 10. The correction unit 134 corrects image data collected by the sensing device 10. The correction unit 134 corrects image data by adjusting the brightness of the image data. The correction unit 134 corrects image data by adjusting the contrast of the image data. The correction unit 134 corrects image data by adjusting the chromaticity of the image data. The correction unit 134 corrects image data according to the image sensor of the sensing device 10. For example, the correction unit 134 uses list information indicating the correction content for each image sensor to correct, among the list information, image data according to the correction content corresponding to the image sensor of the sensing device 10.

The prediction unit 135 predicts various types of information. The prediction unit 135 predicts a label of data. The prediction unit 135 predicts a label of unlabeled data to which no label is assigned. The prediction unit 135 predicts a predicted label of unlabeled data using a classifier trained with a dataset of labeled data to which a label is assigned.

The prediction unit 135 predicts a predicted label of data using the model M2 that is a classifier used for label prediction. The prediction unit 135 inputs data to be predicted (prediction target data) to the model M2, and predicts a predicted label of the prediction target data using an output from the model M2. The prediction unit 135 predicts a classification result of the prediction target data output by the model M2 as the predicted label of the prediction target data.

The learning unit 136 learns various types of information. The learning unit 136 learns various types of information based on information from an external information processing device or the information stored in the storage unit 120. The learning unit 136 learns various types of information based on the information stored in the data information storage unit 121. The learning unit 136 stores the model generated by learning into the model information storage unit 122. The learning unit 136 stores the model updated by learning into the model information storage unit 122.

The learning unit 136 performs a learning process. The learning unit 136 performs various kinds of learning. The learning unit 136 learns various types of information based on the information acquired by the acquisition unit 131. The learning unit 136 trains (generates) a model. The learning unit 136 learns various types of information such as a model. The learning unit 136 generates a model by learning. The learning unit 136 trains the model using various techniques related to machine learning. For example, the learning unit 136 trains parameters of a model (network). The learning unit 136 trains the model using various techniques related to machine learning.

The learning unit 136 generates the model M1. Further, the learning unit 136 generates the model M2. The learning unit 136 trains parameters of a network. For example, the learning unit 136 trains parameters of a network of the model M1. Further, the learning unit 136 trains parameters of a network of the model M2.

The learning unit 136 performs a learning process based on the data for learning (teaching data) stored in the data information storage unit 121. The learning unit 136 generates the model M1 by performing the learning process using the data for learning stored in the data information storage unit 121. For example, the learning unit 136 generates a model used for image recognition. The learning unit 136 generates the model M1 by training the parameters of the network of the model M1. The learning unit 136 generates the model M2 by training the parameters of the network of the model M2.

The method of learning by the learning unit 136 is not particularly limited, but for example, data for learning in which a label and data (image) are correlated with each other may be prepared, and the data for learning may be input to a calculation model based on a multilayer neural network to perform learning. Further, for example, a method based on a deep neural network (DNN) such as a convolutional neural network (CNN) or a 3D-CNN may be used. In a case where the time series data, e.g., a moving image (moving image) such as a video is targeted, the learning unit 136 may use a method based on a recurrent neural network (RNN) or a long short-term memory unit (LSTM) obtained by extending the RNN.

The learning unit 136 generates a trained model by the few-label learning process of training a model using data in which the degree of influence calculated by the calculation unit 132 satisfies the condition. The learning unit 136 performs the few-label learning process using data having a degree of influence greater than a predetermined threshold. The learning unit 136 performs the few-label learning process using a predicted label predicted, by the prediction unit 135, with unlabeled data in which the degree of influence satisfies the condition as target data, and the target data. The learning unit 136 generates a trained model using a dataset to which the target data with the predicted label assigned is added. The learning unit 136 executes a learning process using the dataset.

The learning unit 136 performs the few-label learning process using image data in which a degree of influence satisfies the condition. The learning unit 136 performs the few-label learning process using corrected image data obtained by correcting the image data in which the degree of influence satisfies the condition. The learning unit 136 updates the trained model using the data in which the degree of influence calculated by the calculation unit 132 satisfies the condition.

The transmission unit 137 transmits various types of information. The transmission unit 137 transmits various types of information to an external information processing device. The transmission unit 137 provides various types of information to an external information processing device. For example, the transmission unit 137 transmits various types of information to another information processing device such as the sensing device 10. The transmission unit 137 provides the information stored in the storage unit 120. The transmission unit 137 transmits the information stored in the storage unit 120.

The transmission unit 137 provides various types of information based on information from another information processing device such as the sensing device 10. The transmission unit 137 provides various types of information based on the information stored in the storage unit 120. The transmission unit 137 provides various types of information based on the information stored in the data information storage unit 121, the model information storage unit 122, and the threshold information storage unit 123.

The transmission unit 137 transmits the trained model generated by the learning unit 136 to the sensing device 10. The transmission unit 137 transmits the model M1 that is the generated trained model to the sensing device 10. The transmission unit 137 transmits the trained model updated by the learning unit 136 to the sensing device 10. The transmission unit 137 transmits the updated model M1 to the sensing device 10.

[1-3-1. Model (Network) Example]

As described above, the server device 100 may use a model (network) in the form of a neural network (NN) such as a deep neural network (DNN). The server device 100 may use not only the model in the form of the neural network, but also use various types of models (functions), e.g., a regression model such as a support vector machine (SVM). As described above, the server device 100 may use a model (function) of any format. The server device 100 may use various regression models such as a nonlinear regression model and a linear regression model.

In this regard, an example of the network structure of the model is described with reference to FIG. 8. FIG. 8 is a diagram illustrating an example of a network corresponding to a model. A network NW1 illustrated in FIG. 8 is a neural network including a plurality of (multilayer) intermediate layers between an input layer INL and an output layer OUTL. The network NW1 illustrated in FIG. 8 corresponds to the neural network NN in FIG. 2. For example, the server device 100 may train parameters of the network NW1 illustrated in FIG. 8.

The network NW1 illustrated in FIG. 8 corresponds to the network of the model M1, and FIG. 8 is a conceptual diagram illustrating a neural network (model) used for image recognition. For example, in the network NW1, in a case where an image is input from the input layer INL side, the recognition result is output from the output layer OUTL. For example, the server device 100 inputs information to the input layer INL in the network NW1 to thereby output a recognition result corresponding to the input from the output layer OUTL.

In FIG. 8, the network NW1 is illustrated as an example of the model (network), but the network NW1 may have various forms depending on the use and the like. For example, the server device 100 trains the model M1 by training parameters (weights) of the model M1 having the structure of the network NW1 illustrated in FIG. 8.

[1-4. Configuration of Sensing Device According to Embodiment]

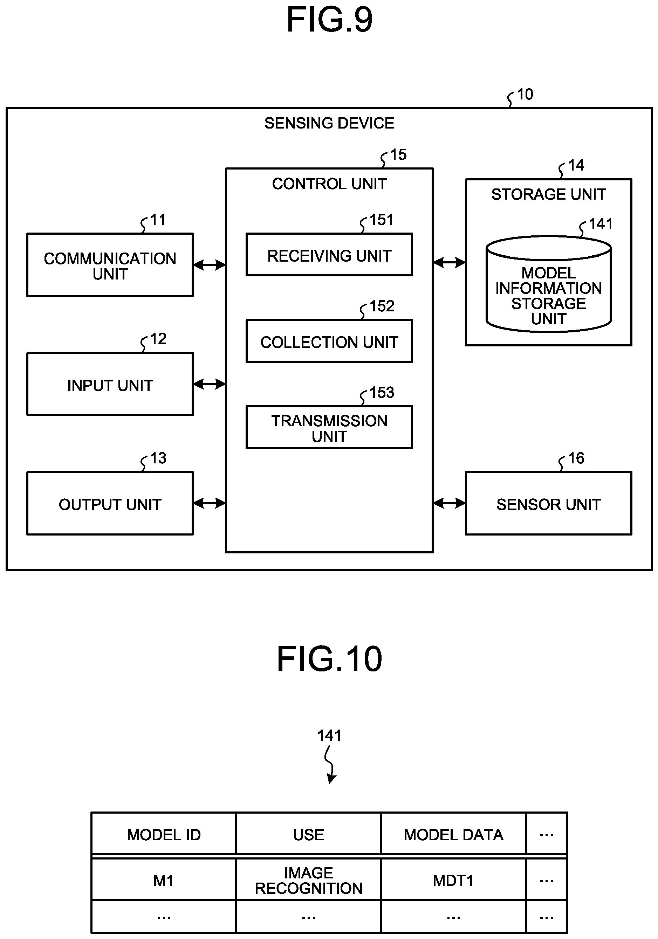

Next, a configuration of the sensing device 10, which is an example of the sensing device that executes the information processing according to the embodiment, is described. FIG. 9 is a diagram illustrating an example of the configuration of a sensing device according to an embodiment of the present disclosure.

As illustrated in FIG. 9, the sensing device 10 includes a communication unit 11, an input unit 12, an output unit 13, a storage unit 14, a control unit 15, and a sensor unit 16. Note that the sensing device 10 may have any device configuration that enables collection of data and provision thereof to the server device 100. For example, as long as the sensing device 10 includes the communication unit 11 that communicates with the server device 100 and the control unit 15 that performs processing of collecting data, other configurations may be arbitrary. Depending on the type of the sensing device 10, for example, the sensing device 10 is not required to include any of the input unit 12, the output unit 13, the storage unit 14, and the sensor unit 16.

For example, in a case where the sensing device 10 is an image sensor (imager), the sensing device 10 may be configured to have only the communication unit 11, the control unit 15, and the sensor unit 16. For example, an imaging element used in the image sensor (imager) is a complementary metal oxide semiconductor (CMOS). The imaging element used in the image sensor (imager) is not limited to the CMOS, and may be various imaging elements such as a charge coupled device (CCD). For example, in a case where the sensing device 10 is a data server, the sensing device 10 may be configured to have only the communication unit 11, the storage unit 14, and the control unit 15. For example, in a case where the sensing device 10 is a moving object, the sensing device 10 may have a mechanism to enable movement of a drive unit (motor) or the like.

The communication unit 11 is implemented by, for example, an NIC, a communication circuit, or the like. The communication unit 11 is connected to a network N (the Internet or the like) by wire or wirelessly, and transmits and receives information to and from another devices such as the server device 100 via the network N.

The input unit 12 receives various inputs. The input unit 12 receives a user's operation. The input unit 12 may receive an operation (user operation) on the sensing device 10 used by the user as an operation input by the user. The input unit 12 may receive information regarding a user's operation using a remote controller via the communication unit 11. Further, the input unit 12 may include a button provided on the sensing device 10 or a keyboard or a mouse connected to the sensing device 10.

For example, the input unit 12 may have a touch panel capable of implementing functions equivalent to those of a remote controller, a keyboard, and a mouse. In this case, various types of information are input to the input unit 12 via a display (output unit 13). The input unit 12 receives various operations from the user via a screen with a function of a touch panel implemented by various sensors. That is, the input unit 12 receives various operations from the user via the display (output unit 13) of the sensing device 10. For example, the input unit 12 receives a user's operation via the display (output unit 13) of the sensing device 10.

The output unit 13 outputs various types of information. The output unit 13 has a function of displaying information. The output unit 13 is provided in the sensing device 10 and displays various types of information. The output unit 13 is implemented by, for example, a liquid crystal display, an organic electroluminescence (EL) display, or the like. The output unit 13 may have a function of outputting sound. For example, the output unit 13 includes a speaker that outputs sound.

The storage unit 14 is implemented by, for example, a semiconductor memory device such as a RAM or a flash memory, or a storage device such as a hard disk or an optical disk. The storage unit 14 stores various types of information necessary for data collection. The storage unit 14 includes a model information storage unit 141.

For example, the model information storage unit 141 stores information (model data) indicating a structure of the model (network). FIG. 10 is a diagram illustrating an example of a model information storage unit according to an embodiment of the present disclosure. FIG. 10 illustrates an example of the model information storage unit 141 according to the embodiment. In the example illustrated in FIG. 10, the model information storage unit 141 includes items such as "model ID", "use", and "model data".

The "model ID" indicates identification information for identifying a model. The "use" indicates a purpose of the corresponding model. The "model data" indicates model data. Although FIG. 10 illustrates an example in which conceptual information such as "MDT1" is stored in the "model data", but actually, various types of information constituting the model, such as information regarding a network and a function included in the model, are included.

In the example illustrated in FIG. 10, the use of a model identified by the model ID "M1" (model M1) is indicated to be "image recognition". The model M1 is indicated to be a model used for image recognition. Further, the model data on the model M1 is indicated to be the model data MDT1.

Note that the model information storage unit 141 is not limited to the above, and may store various types of information according to the purpose. For example, the model information storage unit 141 stores parameter information of a model trained (generated) through the learning process.

Returning to FIG. 9, the description is continued. The control unit 15 is implemented, for example, in response to a program (for example, an information processing program such as a data provision program according to the present disclosure) stored in the sensing device 10 executed by the CPU, the MPU, or the like using the RAM as a work area. The control unit 15 is a controller, and may be implemented by, for example, an integrated circuit such as an ASIC or an FPGA.

As illustrated in FIG. 9, the control unit 15 includes a receiving unit 151, a collection unit 152, and a transmission unit 153, and implements or executes a function and an action of the information processing described below. The internal configuration of the control unit 15 is not limited to the configuration illustrated in FIG. 9, and may be another configuration that performs information processing to be described later.

The receiving unit 151 receives various types of information. The receiving unit 151 receives various types of information from an external information processing device. The receiving unit 151 receives various types of information from another information processing device such as the server device 100.

The receiving unit 151 receives the trained model trained by the server device 100 from the server device 100. The receiving unit 151 receives, from the server device 100, the trained model updated using the data collected by the sensing device 10 through sensing using the trained model. The receiving unit 151 receives, from the server device 100, the trained model trained by the server device 100 using the image data.

The collection unit 152 collects various types of information. The collection unit 152 determines collection of various types of information. The collection unit 152 collects various types of information based on information from an external information processing device. The collection unit 152 collects various types of information based on the information stored in the storage unit 14. The collection unit 152 collects data by sensing using the model M1 stored in the model information storage unit 141.

The collection unit 152 collects data by sensing using the trained model. The collection unit 152 collects data by sensing using the trained model updated by the server device 100. The collection unit 152 collects image data detected by the sensor unit 16. The collection unit 152 collects image data by sensing using the trained model.

The transmission unit 153 transmits various types of information to an external information processing device. For example, the transmission unit 153 transmits various types of information to another information processing device such as the server device 100. The transmission unit 153 transmits the information stored in the storage unit 14.

The transmission unit 153 transmits various types of information based on information from another information processing device such as the server device 100. The transmission unit 153 transmits various types of information based on the information stored in the storage unit 14.

The transmission unit 153 transmits data collected by sensing to the server device 100 that generates a trained model by the few-label learning process of training a model by using the data in a case where a degree of influence of the data on model training by machine learning satisfies the condition. The transmission unit 153 transmits, to the server device 100, data collected by the collection unit 152 through sensing using the trained model.

The transmission unit 153 transmits the image data collected by sensing to the server device 100. The transmission unit 153 transmits image data detected by an image sensor (image sensor) of the sensor unit 16 to the server device 100.

The sensor unit 16 detects various sensor information. The sensor unit 16 has a function as an imaging unit that captures an image. The sensor unit 16 has a function of an image sensor and detects image information. The sensor unit 16 functions as an image input unit that receives an image as an input.

Note that the sensor unit 16 is not limited to the above, and may include various sensors. The sensor unit 16 may include various sensors such as a sound sensor, a position sensor, an acceleration sensor, a gyro sensor, a temperature sensor, a humidity sensor, an illuminance sensor, a pressure sensor, a proximity sensor, and a sensor for receiving biometric information such as smell, sweat, heartbeat, pulse, and brain waves. The sensors that detect the various types of information in the sensor unit 16 may be a common sensor or may be implemented by different sensors.

[1-5. Procedure of Information Processing According to Embodiment]

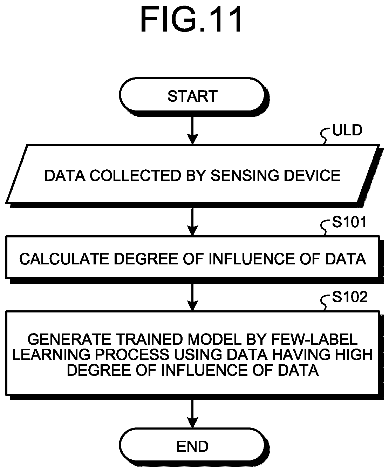

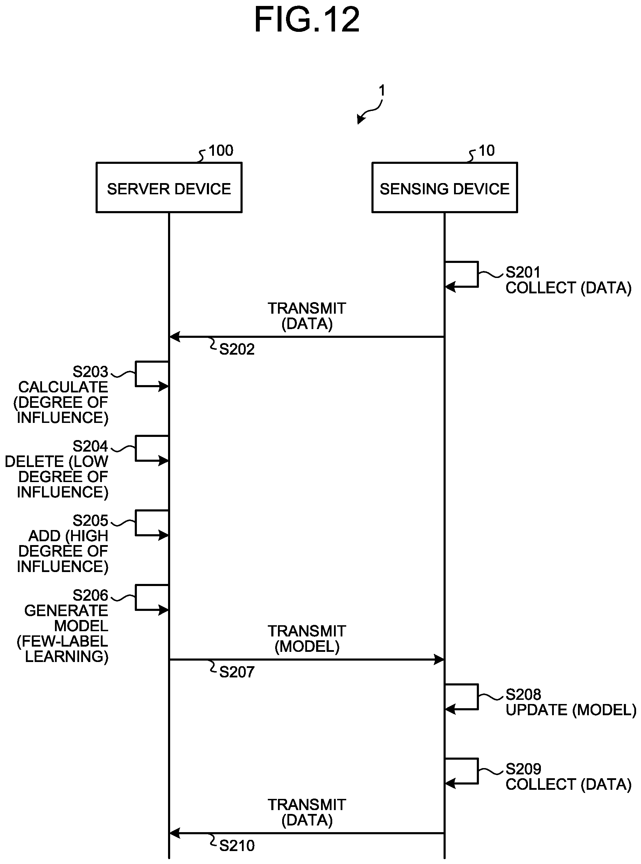

Hereinafter, steps of various types of information processing according to the embodiment are described with reference to FIGS. 11 and 12.

[1-5-1. Procedure of Processing Related to Learning Device]

First, a flow of processing according to a learning device of an embodiment of the present disclosure is described with reference to FIG. 11. FIG. 11 is a flowchart illustrating processing by a learning device according to an embodiment of the present disclosure. Specifically, FIG. 11 is a flowchart illustrating steps of information processing by the server device 100 which is an example of the learning device.

As illustrated in FIG. 11, the server device 100 performs processing using the data ULD collected by the sensing device 10. For example, the server device 100 receives the data ULD from the sensing device 10.

The server device 100 calculates a degree of influence of data (Step S101). For example, the server device 100 calculates a degree of influence of data for each set of data of the data ULD.

The server device 100 generates a trained model by the few-label learning process using data having a high degree of influence of data (Step S102). For example, the server device 100 generates a trained model by the few-label learning process using, among the data ULD, the data having a high degree of influence. The server device 100 predicts a label of the data having a high degree of influence, and generates a trained model using the predicted label and the data having a high degree of influence.

[1-5-2. Procedure of Processing Related to Information Processing System]

Next, an example of specific processing related to the information processing system is described with reference to FIG. 12. FIG. 12 is a sequence diagram illustrating processing steps by an information processing system according to an embodiment of the present disclosure.

As illustrated in FIG. 12, the sensing device 10 collects data by sensing (Step S201). Then, the sensing device 10 transmits the collected data to the server device 100 (Step S202).

The server device 100 calculates a degree of influence of each set of data collected by the sensing device 10 (Step S203). The server device 100 deletes data having a low degree of influence (Step S204). For example, the server device 100 deletes data having a degree of influence equal to or less than the threshold among the data collected by the sensing device 10, and does not store the data in the storage unit 120.

In addition, the server device 100 adds data having a high degree of influence to a dataset (Step S205). The server device 100 adds data having a degree of influence greater than the threshold to a dataset used for learning.

The server device 100 generates a model by the few-label learning process using the dataset to which the data having a high degree of influence is added. (Step S206). For example, the server device 100 predicts a label using the data having a high degree of influence as target data, assigns the predicted label to the target data, and generates a model using a dataset to which the target data is added.

The server device 100 transmits the generated model to the sensing device 10 (Step S207). Then, the sensing device 10 updates the model in the subject device to the model received from the server device 100 (Step S208) .

The sensing device 10 collects data by sensing using the updated model (Step S209). Then, the sensing device 10 transmits the collected data to the server device 100 (Step S210). Then, the information processing system 1 repeats the data collection and model update by repeating the processing of Steps S203 to S210. For example, the server device 100 calculates a degree of influence of the data collected by using the model updated by the sensing device 10. Then, the server device 100 updates the model using data in which a degree of influence satisfies the condition. The server device 100 then transmits the updated model to the sensing device 10. The sensing device 10 collects data by sensing using the updated model.

[2. Other Embodiments]

The processing according to each of the embodiments may be performed in various different forms (modifications) other than the embodiments and modifications thereto.

[2-1. Other Configuration Examples]

In the above example, the server device 100 and the sensing device 10 are separate devices, that is, the learning device that trains the model and the device that senses the data are separate devices, but these devices may be integrated. For example, the sensing device 10 may be a learning device (information processing device) having a function of collecting data by sensing and a function of training a model. In this case, the sensing device 10 has various configurations for training the model of the server device 100 (for example, the calculation unit 132, the learning unit 136, and the like), and generates a model using the data collected by the subject device. The sensing device 10 may be a camera, a smart phone, a television, an automobile, a drone, a robot, or the like. As described above, the sensing device 10 may be a terminal device (computer) that autonomously collects training data having a high degree of influence and generates a model.

[2-2. Others]

Among the processing described in the embodiments, all or a part of the processing, described as automatic processing, can be performed manually, or all or a part of the processing, described as manual processing, can be performed automatically by a known method. In addition, the processing procedures, specific names, and information including various data and parameters indicated in the document and the drawings can be arbitrarily changed unless otherwise specified. For example, various types of information illustrated in the drawings are not limited to the illustrated information.

Further, the constituent elements of the individual devices illustrated in the drawings are functionally conceptual and are not necessarily configured physically as illustrated in the drawings. To be specific, the specific form of distribution and integration of the devices is not limited to the one illustrated in the drawings, and all or a part thereof can be configured by functionally or physically distributing and integrating in arbitrary units according to various loads, usage conditions, and the like.

Further, the embodiments and the modification example described above can be appropriately combined to the extent that the processing contents do not contradict each other.

Further, the effects described in the present specification are merely examples and are not limited, and other effects may be provided.

[3. Effects According to Present Disclosure]

As described above, a learning device (the server device 100 in the embodiment) according to the present disclosure includes a calculation unit (the calculation unit 132 in the embodiment) and a learning unit (the learning unit 136 in the embodiment). The calculation unit calculates a degree of influence of the data collected by a sensing device (the sensing device 10 in the embodiment) on model training by machine learning. The learning unit generates a trained model by the few-label learning process of training a model using data in which the degree of influence calculated by the calculation unit satisfies the condition.

As described above, the learning device according to the present disclosure executes the few-label learning process using data in which a degree of influence on the model training satisfies a condition among the data collected by the sensing device, and generates a model. As a result, the learning device can generate a model using appropriate data by using the data in which the degree of influence satisfies the condition. Thus, the learning device can make a model generated using appropriate data available.

The calculation unit performs the few-label learning process using data having a degree of influence greater than a predetermined threshold. As described above, the learning device executes the few-label learning process using the data having a degree of influence greater than the predetermined threshold, that is, data having a high degree of influence, and generates a model. As a result, the learning device can generate a model using appropriate data by using data having a high degree of influence.

Further, the calculation unit calculates a degree of influence based on the loss function. As described above, the learning device can accurately calculate a degree of influence of each set of data by calculating the degree of influence based on the loss function. Thus, the learning device can generate a model using appropriate data.

Further, the calculation unit calculates a degree of influence by the influence function. As described above, the learning device can accurately calculate a degree of influence of each set of data by calculating the degree of influence based on the influence function. Thus, the learning device can generate a model using appropriate data.

Further, the learning device according to the present disclosure includes a prediction unit (the prediction unit 135 in the embodiment). The prediction unit predicts a label of unlabeled data to which no label is assigned. The learning unit performs the few-label learning process using a predicted label predicted, by the prediction unit, with unlabeled data in which the degree of influence satisfies the condition as target data, and the target data. As described above, the learning device performs the few-label learning process using a predicted label predicted with unlabeled data in which the degree of influence satisfies the condition as target data, and the target data, so that a model can be generated also using the unlabeled data.

Further, the prediction unit predicts a predicted label of the target data using a classifier trained with a dataset of labeled data to which a label is assigned. The learning unit generates a trained model using a dataset to which the target data with the predicted label assigned is added. As described above, the learning device can generate a model using appropriate data by adding a dataset to which the target data with the predicted label assigned is added and generating a trained model using the data.

Further, the learning device according to the present disclosure includes a data management unit (the data management unit 133 in the embodiment). The data management unit deletes data in which the degree of influence does not satisfy the condition, and stores data in which the degree of influence satisfies the condition into the storage unit as a log. As described above, the learning device can reduce the amount of data stored in the storage unit by deleting the data in which the degree of influence does not satisfy the condition. Further, the learning device stores the data in which the degree of influence satisfies the condition into the storage unit (the storage unit 120 in the embodiment) as a log to thereby manage the data used for earning and enable to provide an explanation about the model, such as presenting the data used to generate the model as necessary.

Further, the calculation unit calculates a degree of influence of the image data collected by the image sensor. The learning unit performs the few-label learning process using image data in which a degree of influence satisfies the condition. As described above, the learning device executes the few-label learning process using image data in which a degree of influence on the model training satisfies a condition among the image data collected by the sensing device, and generates a model. As a result, the learning device can generate a model using appropriate image data by using the image data in which the degree of influence satisfies the condition.

Further, the learning unit performs the few-label learning process using corrected image data obtained by correcting the image data in which the degree of influence satisfies the condition. As described above, the learning device can generate a model using appropriate image data by generating a model using the corrected image data.

Further, the learning device according to the present disclosure includes a transmission unit (the transmission unit 137 in the embodiment). The transmission unit transmits a trained model generated by the learning unit to an external device (the sensing device 10 in the embodiment). As described above, the learning device can make a model generated using appropriate data available by transmitting the generated model to the external device.

Further, the calculation unit calculates a degree of influence of the data collected by the sensing device, which is an external device, using the trained model. The learning unit updates the trained model using the data in which the degree of influence calculated by the calculation unit satisfies the condition. In this manner, the learning device can appropriately update a model using the data collected using the generated model. As a result, the learning device can update the model and improve the accuracy (performance) of the model by repeating this loop at regular intervals.

Further, the transmission unit transmits the trained model updated by the learning unit to the sensing device. As described above, the learning device transmits the updated model to the sensing device, which can cause the sensing device to perform processing using the updated model. Thus, the learning device can make a model generated using appropriate data available.

The learning device is a server device that provides a model to the sensing device. As described above, in a system (the information processing system 1 in the embodiment) including the learning device that is the server device and the sensing device, the learning device can make the model generated using appropriate data available.

As described above, the sensing device (the sensing device 10 in the embodiment) according to the present disclosure includes a transmission unit (the transmission unit 153 in the embodiment), a receiving unit (the receiving unit 151 in the embodiment), and a collection unit (the collection unit 152 in the embodiment). The transmission unit transmits data collected by sensing to the learning device (the server device 100 in the embodiment) that generates a trained model by the few-label learning process of training a model by using the data in a case where a degree of influence of the data on model training by machine learning satisfies a condition. The receiving unit receives the trained model learned by the learning device from the learning device. The collection unit collects data by sensing using the trained model.

As described above, the sensing device according to the present disclosure transmits the collected data to the learning device, the learning device executes the few-label learning process using the data in which the degree of influence on the model training satisfies the condition, and receives the generated model. The sensing device collects data by sensing using the model. As a result, the sensing device can collect data using the model generated using the data collected by the subject device. Thus, the sensing device can make a model generated using appropriate data available.

Further, the transmission unit transmits, to the learning device, data collected by the collection unit through sensing using the trained model. As described above, the sensing device provides the learning device with the data collected using the model generated by the learning device, so that the learning device can update the model using the data. Thus, the sensing device can make a model generated using appropriate data available.

The receiving unit receives, from the learning device, the trained model updated using the data collected by the sensing device through sensing using the trained model. The collection unit collects data by sensing using the trained model updated by the learning device. In this manner, the sensing device can collect data using the model updated using the data collected by the subject device. Thus, the sensing device can make a model generated using appropriate data available.

The collection unit collects image data detected by a sensor unit (the sensor unit 16 in the embodiment). As described above, the sensing device collects the image data to thereby enable the learning device to update the model using the image data. Thus, the sensing device can make a model generated using appropriate data available.

Further, the transmission unit transmits the image data collected by sensing to the learning device. The receiving unit receives, from the learning device, the trained model learned by the learning device using the image data. The collection unit collects image data by sensing using the trained model. As described above, the sensing device transmits the collected image data to the learning device, and receives the model generated by the learning device using the image data. The sensing device collects image data by sensing using the model. As a result, the sensing device can collect image data using the model generated using the image data collected by the subject device. Thus, the sensing device can make a model generated using appropriate data available.

[4. Hardware Configuration]

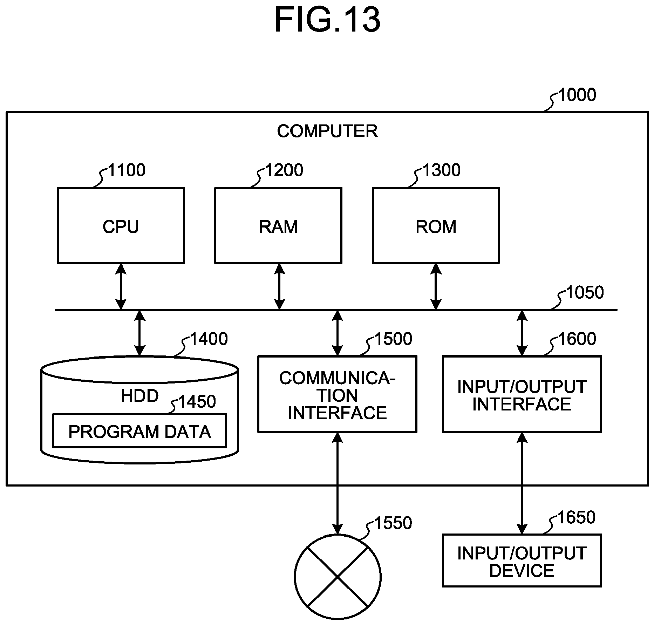

The information devices such as the server device 100 and the sensing device 10 according to the embodiments and the modifications thereto is implemented by a computer 1000 having a configuration as illustrated in FIG. 13, for example. FIG. 13 is a hardware configuration diagram illustrating an example of the computer 1000 that implements the functions of the information devices such as the server device 100 and the sensing device 10. The following describes an example of the server device 100 according to the embodiment. The computer 1000 includes a CPU 1100, RAM 1200, read only memory (ROM) 1300, a hard disk drive (HDD) 1400, a communication interface 1500, and an input/output interface 1600. The units of the computer 1000 are connected to one another by a bus 1050.

The CPU 1100 operates on the basis of a program stored in the ROM 1300 or the HDD 1400 to control the units. For example, the CPU 1100 expands a program stored in the ROM 1300 or the HDD 1400 into the RAM 1200, and executes processing corresponding to various programs.

The ROM 1300 stores a boot program such as a basic input output system (BIOS) executed by the CPU 1100 at the start of the computer 1000, a program that depends on the hardware of the computer 1000, and the like.

The HDD 1400 is a computer-readable recording medium that non-transiently records a program executed by the CPU 1100, data used by the program, and the like. Specifically, the HDD 1400 is a recording medium that records an information processing program, which is an example of the program data 1450, according to the present disclosure.

The communication interface 1500 is an interface for the computer 1000 to connect to an external network 1550 (for example, the Internet). For example, the CPU 1100 receives data from another device or sends data generated by the CPU 1100 to another device via the communication interface 1500.

The input/output interface 1600 is an interface for connecting an input/output device 1650 to the computer 1000. For example, the CPU 1100 receives data from an input device such as a keyboard and a mouse via the input/output interface 1600. The CPU 1100 also sends data to an output device such as a display, a speaker, or a printer via the input/output interface 1600. Furthermore, the input/output interface 1600 may function as a media interface that reads a program or the like recorded in a predetermined recording medium (medium). The medium is, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, or the like.

For example, in a case where the computer 1000 functions as the server device 100 according to the embodiment, the CPU 1100 of the computer 1000 executes an information processing program loaded onto the RAM 1200 to implement a function of the control unit 130 or the like. In addition, the HDD 1400 stores the information processing program according to the present disclosure and data in the storage unit 120. Note that the CPU 1100 reads the program data 1450 out of the HDD 1400 for execution; however, as another example, the programs may be acquired from another device via the external network 1550.

The present technology may also be configured as below.

(1) A learning device comprising:

a calculation unit that calculates a degree of influence of data collected by a sensing device on model training by machine learning; and
a learning unit that generates a trained model by a few-label learning process of training the model by using data in which the degree of influence calculated by the calculation unit satisfies a condition.

(2) The learning device according to (1), wherein

the learning unit
performs the few-label learning process using data having the degree of influence greater than a predetermined threshold.

(3) The learning device according to (1) or (2), wherein

the calculation unit
calculates the degree of influence based on a loss function.

(4) The learning device according to any one of (1) to (3), wherein

the calculation unit
calculates the degree of influence by influence functions.

(5) The learning device according to any one of (1) to (4),

further comprising
a prediction unit that predicts a label of unlabeled data in which no label is assigned, wherein
the learning unit
performs the few-label learning process using a predicted label predicted, by the prediction unit, with unlabeled data in which the degree of influence satisfies the condition as target data, and the target data.

(6) The learning device according to (5), wherein

the prediction unit
predicts the predicted label of the target data using a classifier trained with a dataset of labeled data in which a label is assigned, and
the learning unit
generates the trained model using a dataset to which the target data with the predicted label assigned is added.

(7) The learning device according to any one of (1) to (6), further comprising
a data management unit that deletes data in which the degree of influence does not satisfy the condition, and stores data in which the degree of influence satisfies the condition into a storage unit as a log.
(8) The learning device according to any one of (1) to (7), wherein

the calculation unit
calculates the degree of influence of image data collected by an image sensor, and
the learning unit
performs the few-label learning process using image data in which the degree of influence satisfies the condition.

(9) The learning device according to (8), wherein

the learning unit
performs the few-label learning process using corrected image data obtained by correcting the image data in which the degree of influence satisfies the condition.

(10) The learning device according to any one of (1) to (9), further comprising
a transmission unit that transmits the trained model generated by the learning unit to an external device.
(11) The learning device according to (10), wherein

the calculation unit
calculates the degree of influence of data collected by a sensing device that is the external device using the trained model, and
the learning unit

updates the trained model using data in which the degree of influence calculated by the calculation unit satisfies the condition.

(12) The learning device according to (11), wherein

the transmission unit
transmits the trained model updated by the learning unit to the sensing device.

(13) The learning device according to (11) or (12), wherein
the learning device is a server device that provides a model to the sensing device.
(14) A learning method comprising:

calculating a degree of influence of data collected by a sensing device on model training by machine learning; and
generating a trained model by a few-label learning process of training the model by using data in which calculated the degree of influence satisfies a condition.

(15) A sensing device comprising:

a transmission unit that transmits data collected by sensing to a learning device that generates, in a case where a degree of influence of the data on model training by machine learning satisfies a condition, a trained model by a few-label learning process of training the model by using the data;
a receiving unit that receives the trained model trained by the learning device from the learning device; and
a collection unit that collects data by sensing using the trained model.

(16) The sensing device according to (15), wherein

the transmission unit
transmits the data collected, by the collection unit, by sensing using the trained model to the learning device.

(17) The sensing device according to (16), wherein

the receiving unit
receives, from the learning device, the trained model updated using the data collected, by the sensing device, by sensing using the trained model, and
the collection unit
collects data by sensing using the trained model updated by the learning device.

(18) The sensing device according to any one of (15) to (17), wherein

the collection unit
collects image data detected by a sensor unit.

(19) The sensing device according to claim 18, wherein

the transmission unit
transmits image data collected by sensing to the learning device,
the receiving unit
receives, from the learning device, the trained model trained by the learning device using image data, and
the collection unit
collects image data by sensing using the trained model.

(20) A data collection method comprising:

transmitting data collected by sensing to a learning device that generates, in a case where a degree of influence of the data on model training by machine learning satisfies a condition, a trained model by a few-label learning process of training the model by using the data;
receiving the trained model trained by the learning device from the learning device; and
collecting data by sensing using the trained model. Reference Signs List

| | |
|---|---|
| 1 | INFORMATION PROCESSING SYSTEM |
| 100 | SERVER DEVICE (LEARNING DEVICE) |
| 110 | COMMUNICATION UNIT |
| 120 | STORAGE UNIT |
| 121 | DATA INFORMATION STORAGE UNIT |
| 122 | MODEL INFORMATION STORAGE UNIT |
| 123 | THRESHOLD INFORMATION STORAGE UNIT |
| 130 | CONTROL UNIT |
| 131 | ACQUISITION UNIT |
| 132 | CALCULATION UNIT |
| 133 | DATA MANAGEMENT UNIT |
| 134 | CORRECTION UNIT |
| 136 | LEARNING UNIT |
| 137 | TRANSMISSION UNIT |
| 10 | SENSING DEVICE |
| 11 | COMMUNICATION UNIT |
| 12 | INPUT UNIT |
| 13 | OUTPUT UNIT |
| 14 | STORAGE UNIT |
| 141 | MODEL INFORMATION STORAGE UNIT |
| 15 | CONTROL UNIT |
| 151 | RECEIVING UNIT |
| 152 | COLLECTION UNIT |
| 153 | TRANSMISSION UNIT |
| 16 | SENSOR UNIT |

**Claims**

1. A learning device comprising:

   a calculation unit that calculates a degree of influence of data collected by a sensing device on model training by machine learning; and
   a learning unit that generates a trained model by a few-label learning process of training the model by using data in which the degree of influence calculated by the calculation unit satisfies a condition.

2. The learning device according to claim 1, wherein

   the learning unit
   performs the few-label learning process using data having the degree of influence greater than a predetermined threshold.

3. The learning device according to claim 1, wherein

   the calculation unit
   calculates the degree of influence based on a loss function.

4. The learning device according to claim 1, wherein

   the calculation unit
   calculates the degree of influence by influence functions.

5. The learning device according to claim 1,

   further comprising
   a prediction unit that predicts a label of unlabeled data in which no label is assigned, wherein

the learning unit
performs the few-label learning process using a predicted label predicted, by the prediction unit, with unlabeled data in which the degree of influence satisfies the condition as target data, and the target data.

6. The learning device according to claim 5, wherein

   the prediction unit
   predicts the predicted label of the target data using a classifier trained with a dataset of labeled data in which a label is assigned, and
   the learning unit
   generates the trained model using a dataset to which the target data with the predicted label assigned is added.

7. The learning device according to claim 1, further comprising
   a data management unit that deletes data in which the degree of influence does not satisfy the condition, and stores data in which the degree of influence satisfies the condition into a storage unit as a log.

8. The learning device according to claim 1, wherein

   the calculation unit
   calculates the degree of influence of image data collected by an image sensor, and
   the learning unit
   performs the few-label learning process using image data in which the degree of influence satisfies the condition.

9. The learning device according to claim 8, wherein

   the learning unit
   performs the few-label learning process using corrected image data obtained by correcting the image data in which the degree of influence satisfies the condition.

10. The learning device according to claim 1, further comprising
    a transmission unit that transmits the trained model generated by the learning unit to an external device.

11. The learning device according to claim 10, wherein

    the calculation unit
    calculates the degree of influence of data collected by a sensing device that is the external device using the trained model, and
    the learning unit
    updates the trained model using data in which the degree of influence calculated by the calculation unit satisfies the condition.

12. The learning device according to claim 11, wherein

    the transmission unit
    transmits the trained model updated by the learning unit to the sensing device.

13. The learning device according to claim 11, wherein
    the learning device is a server device that provides a model to the sensing device.

14. A learning method comprising:

    calculating a degree of influence of data collected by a sensing device on model training by machine learning; and
    generating a trained model by a few-label learning process of training the model by using data in which calculated the degree of influence satisfies a condition.

15. A sensing device comprising:

    a transmission unit that transmits data collected by sensing to a learning device that generates, in a case where a degree of influence of the data on model training by machine learning satisfies a condition, a trained model by a few-label learning process of training the model by using the data;
a receiving unit that receives the trained model trained by the learning device from the learning device; and
a collection unit that collects data by sensing using the trained model.

16. The sensing device according to claim 15, wherein

the transmission unit
transmits the data collected, by the collection unit, by sensing using the trained model to the learning device.

17. The sensing device according to claim 16, wherein

the receiving unit
receives, from the learning device, the trained model updated using the data collected, by the sensing device, by sensing using the trained model, and
the collection unit
collects data by sensing using the trained model updated by the learning device.

18. The sensing device according to claim 15, wherein

the collection unit
collects image data detected by a sensor unit.

19. The sensing device according to claim 18, wherein

the transmission unit
transmits image data collected by sensing to the learning device,
the receiving unit
receives, from the learning device, the trained model trained by the learning device using image data, and
the collection unit
collects image data by sensing using the trained model.

20. A data collection method comprising:

transmitting data collected by sensing to a learning device that generates, in a case where a degree of influence of the data on model training by machine learning satisfies a condition, a trained model by a few-label learning process of training the model by using the data;
receiving the trained model trained by the learning device from the learning device; and
collecting data by sensing using the trained model.

# FIG.1

# FIG.2

SERVER DEVICE (100)

COLLECTED DATA (DT11,DT12...) — TG

CALCULATION METHOD (Influence functions) — MT1

| DATA | DEGREE OF INFLUENCE | RS2 |
|------|---------------------|-----|
| DT12 | IV12 | |

| DATA | DEGREE OF INFLUENCE | RS1 |
|------|---------------------|-----|
| DT11 | IV11 | |

| DATA | DETERMINATION RESULT | DR2 |
|------|----------------------|-----|
| DT12 | HIGH DEGREE OF INFLUENCE (ADD) | |

| DATA | DETERMINATION RESULT | DR1 |
|------|----------------------|-----|
| DT11 | LOW DEGREE OF INFLUENCE (DELETE) | |

DATASET — DS1

TRAINED MODEL — M1

SENSING DEVICE — 10

S1  S11  S2  S3  S4  S5  S6  S7  S8  S9  S10

EP 4 414 900 A1

# FIG.3

SENSING DEVICE
(MOVING OBJECT) 10a(10)

SENSING DEVICE
(CAMERA) 10b(10)

SENSING DEVICE
(IMAGE SENSOR) 10c(10)

SENSING DEVICE
(MOVING OBJECT) 10d(10)

N

SERVER DEVICE 100

1

# FIG.4

SERVER DEVICE ~100

COMMUNICATION UNIT ~110

CONTROL UNIT ~130
- ACQUISITION UNIT ~131
- CALCULATION UNIT ~132
- DATAMANAGE-MENT UNIT ~133
- CORRECTION UNIT ~134
- PREDICTION UNIT ~135
- LEARNING UNIT ~136
- TRANSMISSION UNIT ~137

STORAGE UNIT ~120
- DATA INFORMATION STORAGE UNIT ~121
- MODEL INFORMATION STORAGE UNIT ~122
- THRESHOLD INFORMATION STORAGE UNIT ~123

# FIG.5

121

| DATASET ID | DATA ID | DATA | LABEL | DATE AND TIME | ... |
|---|---|---|---|---|---|
| DS1 | DID1 | DT1 | LB1 | DA1 | ... |
| | DID2 | DT2 | LB2 | DA2 | ... |
| | DID3 | DT3 | LB3 | DA3 | ... |
| | DID4 | DT4 | (LB4) | DA4 | ... |
| | DID5 | DT5 | (LB5) | DA5 | ... |
| | DID6 | DT6 | (LB6) | DA6 | ... |
| | DID7 | DT7 | (LB7) | DA7 | ... |
| | DID8 | DT8 | (LB8) | DA8 | ... |
| | ... | ... | ... | ... | ... |
| ... | ... | ... | ... | ... | ... |

# FIG.6

122

| MODEL ID | USE | MODEL DATA | ... |
|---|---|---|---|
| M1 | IMAGE RECOGNITION | MDT1 | ... |
| M2 | LABEL PREDICTION | MDT2 | ... |
| ... | ... | ... | ... |

# FIG.7

123

| THRESHOLD ID | USE | THRESHOLD | ··· |
|---|---|---|---|
| TH1 | DETERMINATION OF DEGREE OF INFLUENCE | VL1 | ··· |
| ··· | ··· | ··· | ··· |

# FIG.8

NW1

INL

OUTL

# FIG.9

**SENSING DEVICE** ⌇10

**CONTROL UNIT** ⌇15

**STORAGE UNIT** ⌇14

**COMMUNICATION UNIT** ⌇11

**RECEIVING UNIT** ⌇151

**MODEL INFORMATION STORAGE UNIT** ⌇141

**INPUT UNIT** ⌇12

**COLLECTION UNIT** ⌇152

**TRANSMISSION UNIT** ⌇153

**OUTPUT UNIT** ⌇13

**SENSOR UNIT** ⌇16

# FIG.10

141

| MODEL ID | USE | MODEL DATA | ... |
|---|---|---|---|
| M1 | IMAGE RECOGNITION | MDT1 | ... |
| ... | ... | ... | ... |

# FIG.11

START

ULD

DATA COLLECTED BY SENSING DEVICE

S101

CALCULATE DEGREE OF INFLUENCE OF DATA

S102

GENERATE TRAINED MODEL BY FEW-LABEL
LEARNING PROCESS USING DATA HAVING HIGH
DEGREE OF INFLUENCE OF DATA

END

# FIG.12

# FIG.13

## INTERNATIONAL SEARCH REPORT

| International application No. |
| --- |
| **PCT/JP2022/034670** |

**A.    CLASSIFICATION OF SUBJECT MATTER**

*G06N 20/00*(2019.01)i; *G06T 7/00*(2017.01)i
FI:    G06N20/00 130; G06T7/00 350B

According to International Patent Classification (IPC) or to both national classification and IPC

**B.    FIELDS SEARCHED**

Minimum documentation searched (classification system followed by classification symbols)

G06N20/00; G06T7/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2020-177344 A (FUJITSU LTD) 29 October 2020 (2020-10-29)<br>paragraph [0021] | 1-20 |
| A | JP 2020-009141 A (HITACHI IND & CONTROL SOLUTIONS LTD) 16 January 2020 (2020-01-16)<br>entire text, all drawings | 1-20 |
| A | JP 2020-204800 A (AWL INC) 24 December 2020 (2020-12-24)<br>entire text, all drawings | 1-20 |
| A | JP 2018-513490 A (SIEMENS AKTIENGESELLSCHAFT) 24 May 2018 (2018-05-24)<br>entire text, all drawings | 1-20 |
| P, X | JP 2021-196921 A (HITACHI LTD) 27 December 2021 (2021-12-27)<br>paragraphs [0006], [0018], [0021], [0035], [0037], [0043], [0064], [0069], [0072], [0081], fig. 8 | 1-2, 5-20 |
| P, A | entire text, all drawings | 3-4 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **02 November 2022** | **06 December 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2022/034670** |

**C.     DOCUMENTS CONSIDERED TO BE RELEVANT**

| Category* | Citation of document, with indication, where appropriate, of the relevant passages | Relevant to claim No. |
| --- | --- | --- |
| A | 田口総樹, ＤＮＮの軽量化実装におけるＸＡＩ利活用の提案, ２０２１年電子情報通信学会基礎・境界ソサイエティ／ＮＯＬＴＡソサイエティ大会, 31 August 2021<br>entire text, all drawings, (TAGUCHI, Soki. Proposal of XAI utilization for DNN layer-reduction implementation.), non-official translation (2021 IEICE Engineerring Sciences Society/NOLTA Society Conference) | 1-20 |

Form PCT/ISA/210 (second sheet) (January 2015)

**INTERNATIONAL SEARCH REPORT**
Information on patent family members

International application No.

**PCT/JP2022/034670**

| Patent document cited in search report | | | Publication date (day/month/year) | Patent family member(s) | | | Publication date (day/month/year) |
|---|---|---|---|---|---|---|---|
| JP | 2020-177344 | A | 29 October 2020 | US | 2020/0334574 | A1 | |
| | | | | paragraph [0036] | | | |
| JP | 2020-009141 | A | 16 January 2020 | (Family: none) | | | |
| JP | 2020-204800 | A | 24 December 2020 | (Family: none) | | | |
| JP | 2018-513490 | A | 24 May 2018 | US | 2018/0121815 | A1 | |
| | | | | entire text, all drawings | | | |
| | | | | CN | 107430711 | A | |
| JP | 2021-196921 | A | 27 December 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021026505 A

**Non-patent literature cited in the description**

- **SATOSHI HARA ; ATSUSHI NITANDA ; TAKA-NORI MAEHARA.** *Data Cleansing for Models Trained with SGD, https://proceedings.neurips.cc/paper/2019/file/5f146156966 49541a025d3d0f8e0447f-Paper.pdf*
- **KENJI SUZUKI ; YOSHIYUKI KOBAYASHI ; TAKUYA NARIHIRA.** *Data Cleansing for Deep Neural Networks with Storage-efficient Approximation of Influence Functions, https://arxiv.org/abs/2103.11807v2*
- **KENJI SUZUKI.** *Data Cleansing, https://github.com/sony/nnabla-examples/tree/master/responsible_ai/data_cleansing*
- **CHIH-KUAN YEH ; JOON SIK KIM ; IAN E.H. YEN ; PRADEEP RAVIKUMAR.** *Representer Point Selection for Explaining Deep Neural Networks, https://arxiv.org/abs/1811.09720*